# EUROPEAN PATENT APPLICATION

(11) **EP 1 241 881 A2**
(43) Date of publication of application: **18.09.2002**
(21) Application number: 02006006.7
(22) Date of filing: 15.03.2002
(51) Int. Cl.: H04N 5/76, H04N 5/782

(54) **Data broadcast scheduling system, and apparatus, method, recording medium and program therefor**

(30) Priority: 16.03.2001 JP 2001077323; 29.01.2002 JP 2002020772
(71) Applicant: MATSUSHITA ELECTRIC INDUSTRIAL CO., LTD., Kadoma-shi, Osaka-fu (JP)
(72) Inventor: Nakada, Toru, Tokyo (JP); Kageyama, Mitsuhiro, Tachikawa-shi, Tokyo (JP); Shinohara, Hiroki, Yokohama-shi, Kanagawa (JP); Nagao, Takeshi, Kawaguchi-shi, Saitama (JP); Fujitsu, Satoshi, Tokyo (JP); Arai, Yuko, Tokyo (JP)
(74) Representative: Grünecker, Kinkeldey, Stockmair & Schwanhäusser Anwaltssozietät

(57) **Abstract**

Disclosed is a transmitting apparatus including: a contents information storing part (102) for storing contents information; a basic schedule creating part (103) for creating a basic schedule as a model of a broadcast schedule on the basis of the contents information; a broadcast schedule creating part (106) for creating a broadcast schedule on the basis of the basic schedule; a broadcast schedule storing part (107) for storing the broadcast schedule; a contents storing part (108) for storing contents; and a transmitting part (109) for transmitting the broadcast schedule and contents, wherein a contents. transmitting schedule for managing a storing state in a storage area of a receiving apparatus from the transmitting apparatus is created, accompanying information of contents is added to the schedule, and the resultant is transmitted.

## Description

### BACKGROUND OF THE INVENTION

### Field of the Invention

The present invention relates to a technique of drawing up a schedule of transmitting contents and adding accompanying information of a contents for managing a storing state in a storage area of a receiving apparatus from a transmitting apparatus, in stored data broadcasting for automatically storing a contents into the receiving apparatus and automatically updating the contents.

### Description of Prior Art

In a digital broadcast, not only a conventional program of mainly video and sound to be watched and listened but also various services such as data broadcast are being provided. As the price of a storing medium is becoming lower and the density is becoming higher, a service provided for a case where a storing apparatus is connected to a receiving apparatus, and a broadcast data program is stored once and used is being practically provided. The person who selects a contents to be stored is the user and the user selects contents which can be stored while checking the remaining capacity of a storage area of a receiving apparatus.

A transmitting apparatus in a conventional storage data broadcast generates and transmits a transmitting schedule of updated contents. Since the receiving apparatus repeats an operation of presetting and storing only when contents of a version which is not held is transmitted, the receiving and presetting timing and time of presetting vary according to the contents holding state of a receiving apparatus. Therefore, when a contents is to be urgently changed, the change cannot be notified to a receiving apparatus which is in a sleep mode until the next preset time. Since the sleep mode is set independently in each receiving apparatus, time to transmit a contents to be urgently replaced cannot be determined.

In the storage data broadcasting in recent years, business for storing a contents in a storage area of a receiving apparatus in accordance with the intention on the transmission side appears. The business involves a contents provider for providing contents and a platform agency for assuring transmission of contents and storage of the contents into a storage area of a receiving apparatus. The platform agency makes contents stored into the storage area in a receiving apparatus with reliability, thereby obtaining a consideration from the contents provider. To do this business, the platform agency has to store all of contents requested to be stored from the contents provider into storage areas in receiving apparatuses with reliability.

### SUMMARY OF THE INVENTION

According to the present invention, to store data into a storage area in a receiving apparatus, a transmitting apparatus for transmitting data includes: a contents information storing part for storing a list of attributes preset for each contents; and a basic schedule creating part for creating a schedule (hereinbelow, called a basic schedule) as a model schedule for repeatedly transmitting contents on the basis of contents information stored in the contents information storing part, and a basic schedule for assuring repeated transmission of contents even when the actual size of the contents is changed is created. With the configuration, by creating a basic schedule as the model of a broadcast schedule from contents information and creating the broadcast schedule in which the basic schedule is repeated, without depending on the actual size of contents which may be changed every registration and a timing of registration, the broadcast schedule can be generated prior to transmission of contents.

According to the invention, the transmitting apparatus further includes: a basic schedule storing part for storing a basic schedule; a broadcast schedule creating part for creating a broadcast schedule from the basic schedule; a broadcast schedule storing part for storing the broadcast schedule; a contents storing part for storing contents; and a transmitting part for transmitting the broadcast schedule and contents in accordance with the broadcast schedule. The broadcast schedule creating part creates a broadcast schedule from the basic schedule stored in the basic schedule storing part and stores the broadcast schedule into the broadcast schedule storing part, and the transmitting apparatus transmits the broadcast schedule and contents stored in the contents storing part. At the time of creating the basic schedule, contents having the same update frequency are set in the same schedule, so that power saving in the receiving apparatus can be realized.

According to the invention, a transmitting apparatus as a first mode includes: a contents registering part for, when a contents registering request is received, checking a contents with contents information registered to see whether ID, size, and the like of contents are as set; a contents information storing part for storing contents information; a basic schedule creating part for creating a format of a broadcast schedule; an urgent change schedule setting part for setting a schedule for urgent change in the basic schedule; a basic schedule storing part for storing a basic schedule; a broadcast schedule creating part for creating a broadcast schedule from the basic schedule; a broadcast schedule storing part for storing a broadcast schedule and instructing transmission of contents; a contents storing part for transmitting contents in accordance with a broadcast schedule stored in the broadcast schedule storing part; and a transmitting part for transmitting the contents and the broadcast schedule. By setting the series for force start at a certain frequency in the broadcast schedule, the time when the receiving apparatus always starts can be specified, and the transmitting apparatus can assure the urgent updating at the same frequency.

A transmitting apparatus according to a second mode does not have the urgent change schedule setting part in the first mode but, instead, has an urgent change contents setting part.

A transmitting apparatus according to a third mode does not have the urgent change schedule setting part in the first mode but, instead, has a part for setting series for deletion.

A transmitting apparatus according to a fourth mode does not have the urgent change schedule setting part in the first mode but, instead, has a presentation period assigning part for assigning presentation period to contents.

A transmitting apparatus in a fifth mode generates download data control data including operation information of download data in a receiving machine on the transmitting apparatus side in operation of transmitting and receiving data between the transmitting apparatus and the receiving machine, and a data broadcast scheduling system capable of controlling registration and deletion of an arbitrary directory in the receiving machine, and an apparatus, a method, a recording medium, and a program for the system are provided.

As described above, by creating a basic schedule as a model of a broadcast schedule from contents information and creating the broadcast schedule in which the basic schedule is repeated, without depending on the actual size of contents which may be changed every registration and a timing of registration, the broadcast schedule can be generated prior to transmission of contents.

At the time of creating the basic schedule, contents having the same update frequency are set in the same schedule, so that power saving in the receiving apparatus can be realized.

By setting the series for force start at a certain frequency in the broadcast schedule, the time when the receiving apparatus always starts can be specified, and the transmitting apparatus can assure the urgent updating at the same frequency.

By setting a non-scrambled deletion series for transmitting unassigned contents, the receiving apparatus which has canceled subscription of scrambled service can be instructed to delete contents with reliability.

By assigning presentation expiry to contents while extending it by the transmitting apparatus, in the receiving apparatus which has stopped subscription before transmission of service is finished, the contents presentation of the expired service can be regulated.

Since download data control data including operation information of download data in a receiving machine is generated in the transmitting apparatus side in the operation of transmitting/receiving data between the transmitting apparatus and the receiving machine, and an arbitrary directory in the receiving machine is controlled to be registered or deleted. Thus, without overflowing the recording medium of the receiving apparatus, data can be transmitted on the basis of the control from the transmitting apparatus side, and always new data can be transmitted to the receiving apparatus, and can be stored in the receiving apparatus.

A first object of the invention is to provide a data broadcast scheduling system capable of allowing a platform agency to store contents requested to store by a contents provider into a storage area in a receiving apparatus with reliability at the time of storing the data into the storage area in the receiving apparatus, and to provide an apparatus, a method, a recording medium, and a program each for the system.

A second object of the invention is to provide a data broadcast scheduling system capable of generating download control data including operation information of download data in a receiving machine on a transmitting apparatus side in data transmitting/receiving operation and controlling registration/deletion of an arbitrary directory in the receiving machine, and to provide an apparatus, a method, a recording medium, and a program each for the system.

The objects and advantages of the invention will become more apparent from the following embodiments described with reference to the drawings.

### BRIEF DESCRIPTION OF THE DRAWINGS

FIG. 1 is a block diagram showing an example of the configuration of a transmitting apparatus and a receiving apparatus of contents in a first embodiment of the invention.
FIG. 2 is a diagram showing an example of contents information in the first embodiment.
FIG. 3 is a diagram showing an example of a series table in the first embodiment.
FIG. 4 is a diagram showing an example of a series and contents correspondence table in the first embodiment.
FIG. 5 is a diagram showing an example of a basic schedule (unit of 24 hours) in the first embodiment.
FIG. 6 is a diagram showing an example of a broadcast schedule in the first embodiment.
FIG. 7 is a diagram showing an example of a stored final episode_number table and preset information in the first embodiment.
FIG. 8 is a flowchart for explaining a basic contents transmitting process in the first embodiment.
FIG. 9 is a flowchart for explaining a transmitting process which enables contents to be urgently changed by using a series for urgent change in the first embodiment.
FIG. 10 is a flowchart for explaining a transmitting process which enables contents to be urgently changed without using a series for urgent change in the first embodiment.
FIG. 11 is a flowchart for explaining a transmitting process which enables contents to be deleted in the first embodiment.
FIG. 12 is a flowchart for explaining a contents receiving process in the first embodiment.
FIG. 13 is a diagram showing an example of a series setting table in the first embodiment.
FIG. 14 is a diagram showing an example of a broadcast schedule of March 12, 2001 in the first embodiment.
FIG. 15 is a diagram showing an example of a series setting table in which a series for urgent change is set in the first embodiment.
FIG. 16 is a diagram showing an example of a series and contents correspondence table in the case where a contents is not assigned to the series for urgent change in the first embodiment.
FIG. 17 is a diagram showing a series and contents correspondence table in the case of assigning a contents to the series for urgent change in the first embodiment.
FIG. 18 is a diagram showing an example of the relation of storage area sizes of services managed by a transmitting apparatus and area sizes of subscriptions of receiving apparatuses in a third embodiment of the invention.
FIG. 19 is a diagram showing an example where the state of the storage area size of each service managed by the transmitting apparatus changes in the third embodiment.
FIG. 20 is a block diagram showing the configuration of a transmitting apparatus and a receiving apparatus in the third embodiment.
FIG. 21 is a diagram showing an example of a series setting table in which a series to be deleted is set in the third embodiment.
FIG. 22 is a diagram showing an example of contents information including a contents of which setting is to be deleted in the third embodiment.
FIG. 23 is a diagram showing an example of a series and contents correspondence table in which the contents of which setting is deleted is assigned to a series to be deleted in the third embodiment.
FIG. 24 is a block diagram showing the configuration of a transmitting apparatus and a receiving apparatus in a fourth embodiment of the invention.
FIG. 25 is a diagram showing an example of contents information stored by a contents information storing part in the fourth embodiment.
FIG. 26 is a diagram showing an example of a contents presentation expiry extending interval table in the fourth embodiment.
FIG. 27 is a diagram showing an example of the contents presentation expiry extending interval and a presentation expiry switching timing.
FIG. 28 is a diagram showing an example of a correspondence table between a presentation expiry assigned to a contents of Content_id2 and an assigned period in the fourth embodiment.
FIG. 29 is a diagram showing an example of a presentation expiry switching timing table in the fourth embodiment.
FIG. 30 is a diagram showing an example of an image of a contents transmitted from the transmitting part in the fourth embodiment.
FIG. 31 is a diagram showing an example of a contents management table managed by a contents storing part in a receiving apparatus in the fourth embodiment.
FIG. 32 is a flowchart for explaining assignment of presentation expiry in the fourth embodiment.
FIG. 33 is a flowchart of creating a correspondence table of the presentation expiry assigned to a contents in the presentation expiry assigning part and an assigned period in the fourth embodiment.
FIG. 34 is a diagram showing an example of a table indicating a policy of setting a series for force start in the fourth embodiment.
FIG. 35 is a block diagram showing the configuration of a transmitting apparatus and a receiving apparatus of contents in a second embodiment of the invention.
FIG. 36 is a block diagram showing the configuration of a transmitting apparatus and a receiving apparatus of contents in a fifth embodiment of the invention.
FIG. 37 is a flowchart for explaining an operation of transmitting and receiving data between the data transmitting apparatus and receiving apparatus according to the fifth embodiment.
FIG. 38 is a data structure diagram showing the structure of download data control data in the fifth embodiment.
FIG. 39 is a flowchart for explaining an operation of registering and deleting data in a receiving apparatus in the fifth embodiment.
FIG. 40 is a diagram schematically showing a state where data in a recording medium is reduced by the data deleting process in the receiving apparatus in the fifth embodiment.
FIG. 41 is a flowchart for explaining a method of controlling whether data can be displayed or not on the basis of the presentation period assigned to each data in the receiving apparatus in the fifth embodiment.
FIG. 42 is a diagram showing a concrete example of a control of whether data can be displayed or not on the basis of the presentation period assigned to each data in a receiving apparatus in the fifth embodiment.

### DESCRIPTION OF THE PREFERRED EMBODIMENTS

Embodiments of the invention will be described hereinbelow with reference to the drawings. The invention is not limited to the embodiments but can be carried out in various modes without departing from the gist.

### First Embodiment

First, basic operations of a transmitting apparatus and a receiving apparatus of the invention will be described.

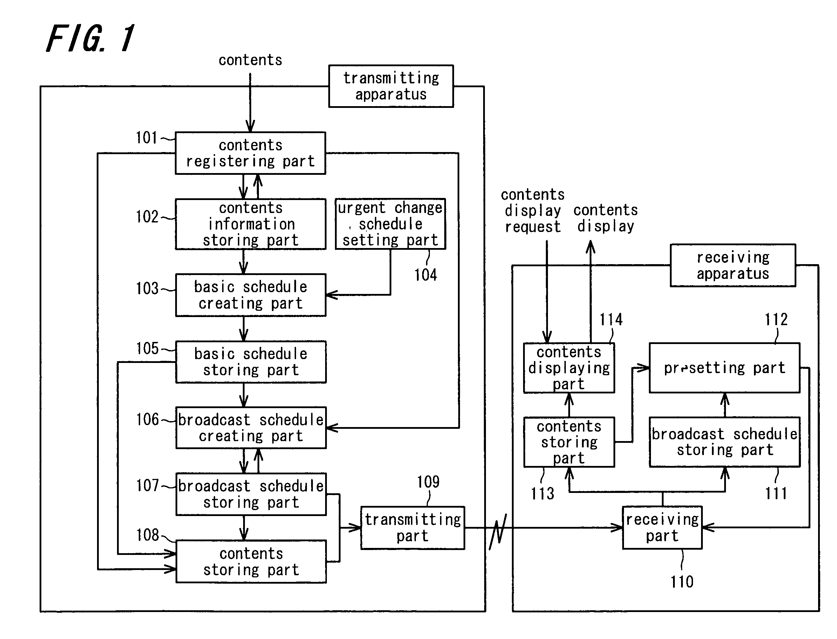

FIG. 1 is a block diagram showing an example of the configuration of a transmitting apparatus and a receiving apparatus of contents according to a first embodiment of the invention.

The transmitting apparatus shown in FIG. 1 includes: a contents registering part 101 for, when a contents registering request is received, checking a contents with contents information registered to see whether ID, size, and the like of contents are as set; a contents information storing part 102 for storing contents information; a basic schedule creating part 103 for creating a format of a broadcast schedule; an urgent change schedule setting part 104 for setting a schedule for urgent change in the basic schedule; a basic schedule storing part 105 for storing a basic schedule; a broadcast schedule creating part 106 for creating a broadcast schedule from the basic schedule; a broadcast schedule storing part 107 for storing a broadcast schedule and instructing transmission of contents; a contents storing part 108 for transmitting contents in accordance with a broadcast schedule stored in the broadcast schedule storing part 107; and a transmitting part 109 for transmitting the contents and the broadcast schedule.

The receiving apparatus shown in FIG. 1 includes: a receiving part 110 for receiving a broadcast schedule and contents; a broadcast schedule storing part 111 for storing a broadcast schedule; a presetting part 112 for making presetting to start the receiving part; a contents storing part 113 for storing contents received; and a contents display part 114 for displaying contents.

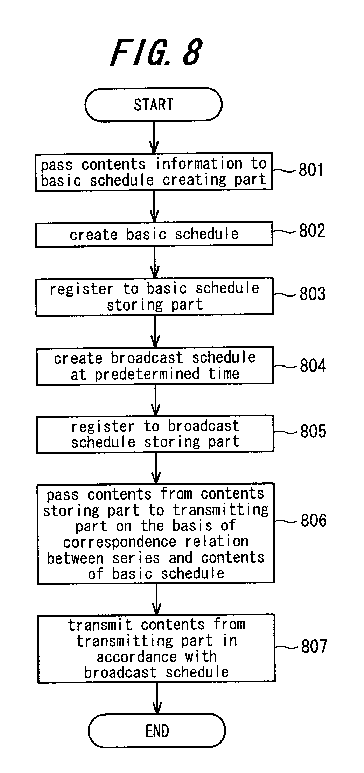

The operation of the transmitting apparatus according to the embodiment will now be described. FIG. 8 is a flowchart for explaining the operations of the transmitting apparatus in the embodiment.

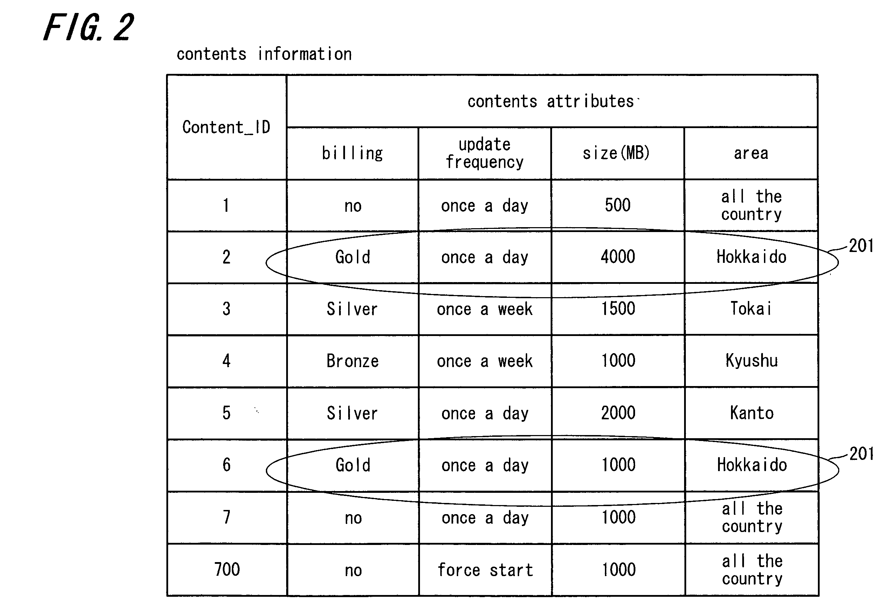

In FIG. 8, in processing step (hereinbelow, simply called step) 801, contents information stored in the contents information storing part 102 is preset prior to contents registration and transferred to the basic schedule creating part 103. The contents information will be described by using an example of the contents information of FIG. 2 hereinbelow. The contents information is made up of contents ID and contents attributes. The contents attributes include, for example, billing, update frequency, maximum size, and filtering information (area). For example, a billing unit is "gold", "silver", and "bronze", and the update frequency has two kinds of "once a week" and "once a day". There is a case that area information is included as filtering information. The areas are divided into "all over the country", and areas (Tohoku, Kanto, Tokai, Kinki, and so one) . Contents ID 1 has contents attributes of no billing, once a day of update frequency, contents maximum size of 500MB, and the area of all over the country. The contents attributes are similarly set for each of the contents. In the update frequency of contents ID 700, "force start" is defined, which will be described hereinlater.

The reason why the contents information is preset is, as described above, that a platform agency requested to store contents by a contents provider can assure storage of contents into a storage area of a receiving apparatus with reliability. When storage of contents larger than the storage capacity of the receiving apparatus is requested, the platform agency cannot assure storage of the contents. Consequently, it is necessary to preset the maximum size of each contents of each contents agency. As the condition for storing all of contents in the storage area in the receiving apparatus, each contents provider has to keep the set maximum size. The attributes other than the maximum size are information necessary for the basic schedule creating part 103 to create a basic schedule as will be described hereinlater.

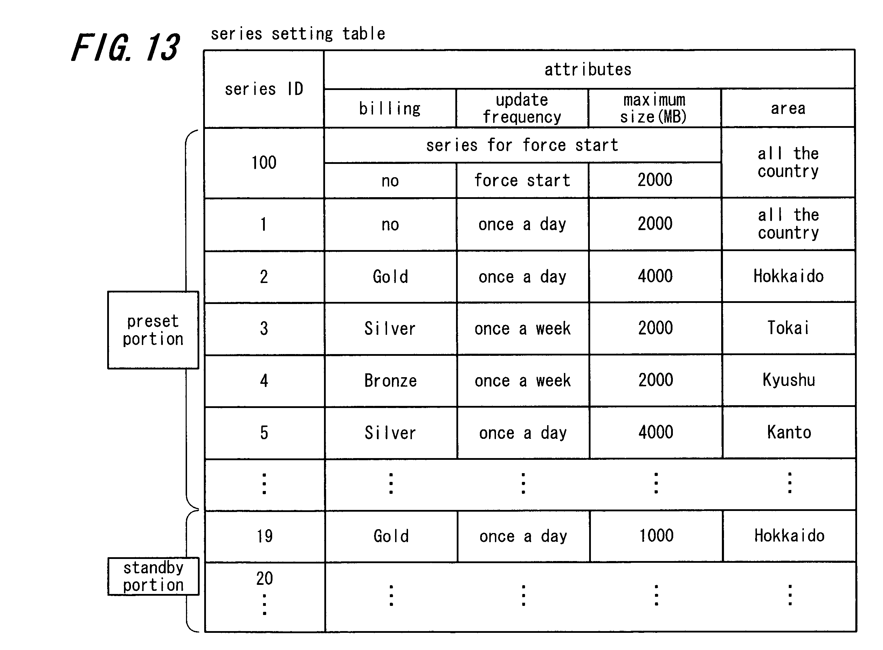

The basic schedule creating part 103 which receives the contents information creates a series setting table prior to creation of a basic schedule. The creation of a series setting table will be described by using an example of the series setting table in FIG. 13 (a series is used to identify a reception unit, and the receiving apparatus uses a series to determine reception). The basic schedule creating part 103 sets attributes (update frequency, billing unit, filtering information, and the like) for a series. Series are divided into series (series ID 100, series ID1 to ID5, ... in FIG. 13) in which attributes are preset and standby series (series ID 19, ...) in which attributes are not set in the series setting table. For example, the series 2 in FIG. 13 shows that contents of which billing is "Gold", update frequency is once a day, and area is Hokkaido is transmitted.

The preset series include a series 100 for force start. Since episode_number as a transmission version in the series increases each time in a broadcast schedule, the receiving apparatus determines updating of contents on the reception unit basis in a series by episode_number each time and always starts. The series for force start is set so as to be transmitted in a cycle independent of the other series, so that a timing at which the receiving apparatus is activated forcedly can be set (which will be described hereinlater) . The standby series is assigned to transmit contents which cannot be transmitted by a preset series in the case where the reception unit of a series preset in the basic scheduling creation is equal to or larger than the total of predetermined maximum sizes of contents (maximum size in FIG. 13) or predetermined transmission time. The standby series is also assigned to transmit a contents having no attributes corresponding to the series in which attributes are preset. Although the maximum size per series is determined here, the maximum size (or longest transmission time) common to all the series or the maximum size (or longest transmission time) for the series for force start and that for the other series may be set.

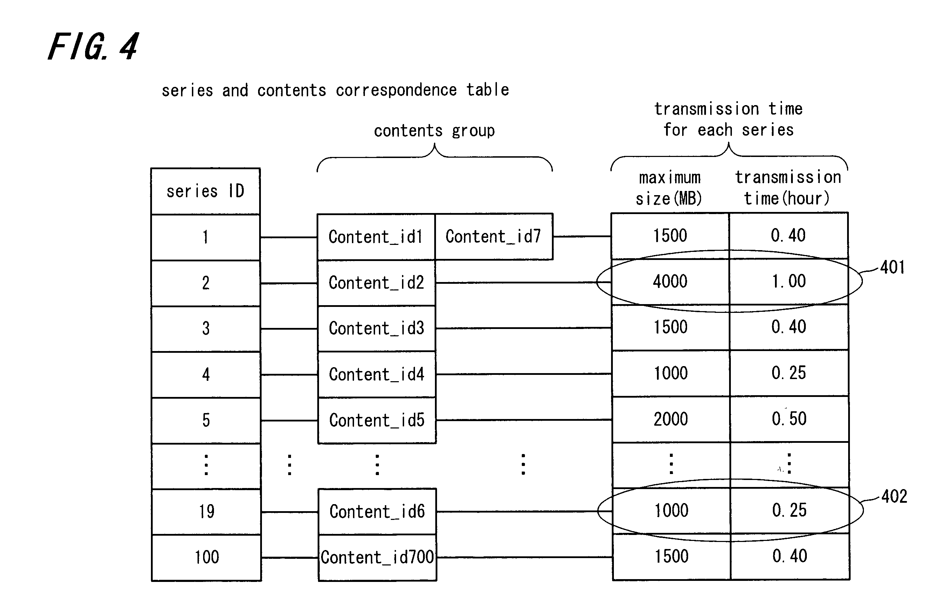

By using the series setting table (FIG. 13) preset by the basic schedule creating part 103 and the contents information (FIG. 2) received from the contents information storing part 102, a table of correspondence between series and contents is created. The creating procedure will be described by referring to FIGS. 2, 4, and 13. The basic schedule creating part 103 determines the correspondence relation between the series and contents on the basis of the contents attribute and series attributes, and creates a basic schedule. Concretely, when the contents attributes (billing, update frequency, and area) of the contents information in FIG. 2 match the series attributes (billing, update frequency, and area) in FIG. 13 and the total size of the contents group is smaller than the maximum size of the series, the series and the contents are associated with each other. For example, the attributes of the contents 1 and 7 in the contents information of FIG. 2 are no billing, update frequency of once a day, and area of all the country. The attributes of the series 1 in FIG. 13 are no billing, update frequency of once a day, and area of all the country, and match the attributes of the contents 1 and 7. Further, the total size which is 1500MB of the contents 1 and 7 is smaller than the maximum size 2000MB of the series 1. Thus, the contents 1 and 7 can be associated with the series 1. As a result, in the series and contents correspondence table in FIG. 4, as the group of contents in the series 1, the contents 1 and 7 are written. The other contents are also similarly associated with series on the basis of the attributes (including contents in which force start is set in the attributes).

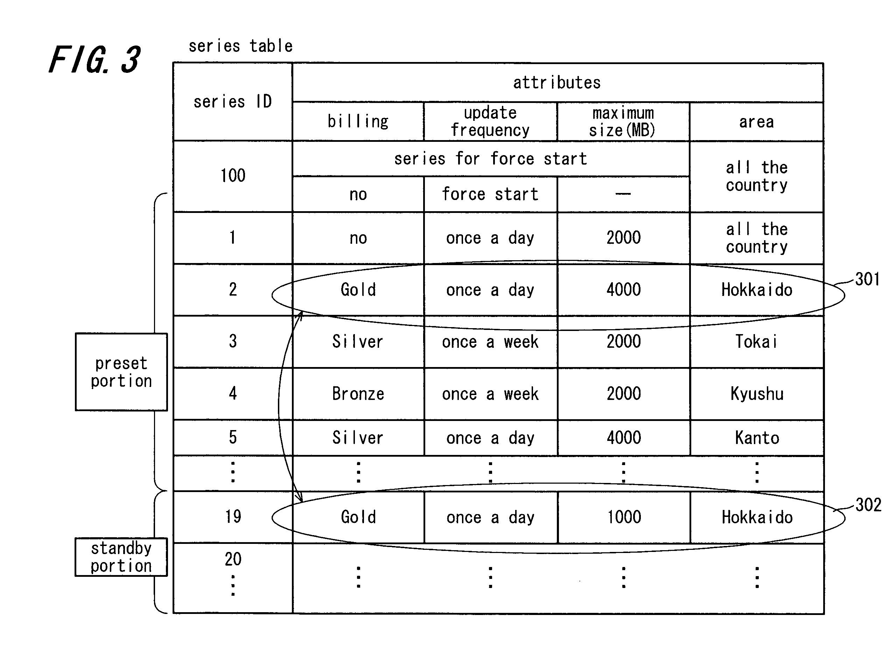

The contents 2 (201 in FIG. 2) is associated with the series 2 on the basis of the attributes (401 in FIG. 4). Although the attributes of the contents 6 (202 in FIG. 2) match the attributes of the series 2, the contents 6 is associated with not the series 2 but a series 19 (402 in FIG. 4) for the following reason. As shown in FIG. 13, since the maximum size of the series 2 is 4000MB, when the contents 6 (size 1000MB) is added to the series 2, the size of the contents group becomes 5000MB and exceeds the maximum size. In this case, a series having the same attributes as the series 2 is assigned from standby series. The series 19 is set so as to have same attributes as those of the series 2. The series 19 newly assigned is associated with the contents 6 (402 in FIG. 4). As a result, from the series setting table of FIG. 13, the series table as shown in FIG. 3 and a corresponding part of the series ID and contents group in the series and contents correspondence table as shown in FIG. 4 are created.

Subsequently, the basic schedule creating part 103 calculates the maximum size and transmission time of each series in the series and contents correspondence table of FIG. 4. The maximum size of a series is the total of the maximum sizes of contents associated with the series. For example, in the series and contents correspondence table of FIG. 4, the contents 1 and 7 are associated with the series 1. The maximum sizes of the contents 1 and 7 are known as 500MB and 1000MB, respectively, from the contents information of FIG. 2, so that 1500MB as the total is written in the column of the maximum size of the series 1 in FIG. 4. By repeating the process on all the series, the series and contents correspondence table as shown in FIG. 4 is completed.

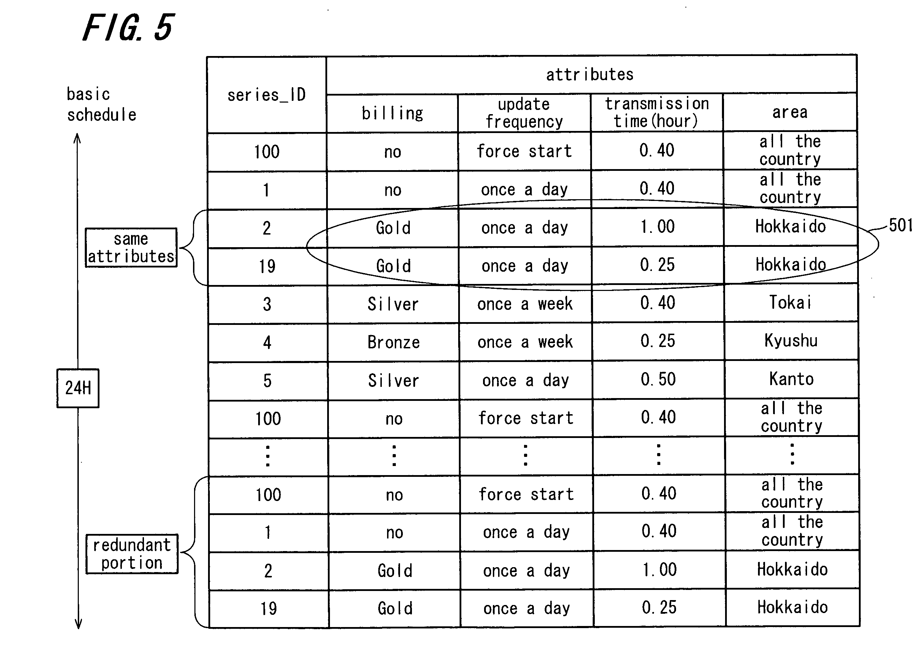

The flow of operation of creating a basic schedule of FIG. 5 from the series table of FIG. 3 and the series and contents correspondence table of FIG. 4 will now be described. A basis schedule having a length longer than transmission time of each contents of FIG. 4 is created (24 hours in the example of FIG. 5). The basic schedule is a model for making a broadcast schedule and is repeatedly sent for the reason that in storage data broadcasting, since it is unknown when a receiving apparatus is purchased, the receiving apparatus which starts receiving data at arbitrary timing receives all of contents in a storing apparatus after predetermined time of reception. For this purpose, the contents which is not updated is also repeatedly sent, and the basic schedule is a model for the repeated transmission.

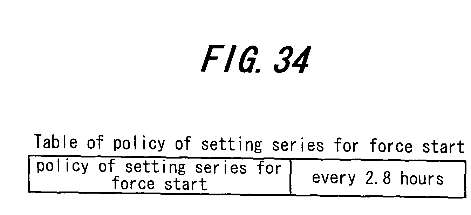

First, the series 100 for force start in the series table is set in the basic schedule. The policy of setting the series for force start is indicated in a policy table for setting the series for force start of FIG. 34 held by the basic schedule creating part, which shows the interval and frequency of setting the series for force start. For example, "every 2.8 hours" is set in FIG. 34. Other setting methods such as the number of transmitting times per day can be also considered. As the policy, a proper value is set from the viewpoint of operating the system. For example, according to the frequency of the series for force start, how fast a contents can be urgently updated (to be described hereinlater) varies. Therefore, the policy has to be set on the basis of the time for the contents urgent updating. However, if the series for force start is set too frequent, the frequency of transmitting normal contents becomes low. The policy has to be determined in consideration of a tradeoff between the frequency of the series for force start and the frequency of normal contents. In the example of FIG. 5, according to the policy of setting the series for force start of FIG. 34, the series for force start is set every 2.8 hours. Although the series for force start is set so as not to create idle time in broadcast time in the basic schedule by using the value of the policy of setting a series for force start as a reference, the policy of setting series for force start may be always kept (in this case, idle broadcast time may occur in the basic schedule).

The series other than the series for force start are set in the basic schedule of FIG. 5 in accordance with the order in the series table of FIG. 3. Series having the same attributes are set adjacent to each other on the schedule so as to be transmitted continuously. For example, in the series table of FIG. 3, the series 2 and 19 have the same attributes, so that they are set next to each other (501 in FIG. 5). When the total of transmission time of all the series is less than 24 hours, the series are set again from the head series of the schedule as a redundant portion to generate the basic schedule of 24 hours. In the example of FIG. 5, the series 100, 1, 2, and 19 as the head portion of the basic schedule are added as the redundant portion. Since the subsequent series (series 3, 4, 5, ...) cannot be set in the frame of 24 hours of the basic schedule, they cannot be added as the redundant portion. As transmission time in the basic schedule (FIG. 5), the value of transmission time written for each series in the series and contents correspondence table of FIG. 4 is set.

The creation of the basic schedule is completed by the above process (step 802), and the basic schedule is registered in the basic schedule storing part 105 (step 803) and transmitted to the broadcast schedule creating part 106.

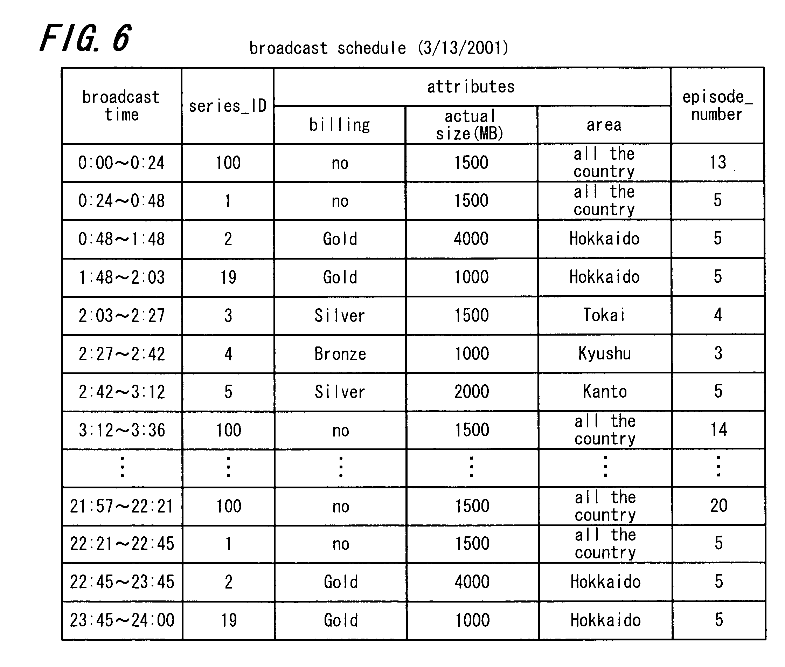

An example of creation of the broadcast schedule will be described hereinbelow with reference to FIGS. 5 and 6. The broadcast schedule creating part 106 starts at predetermined time (for example, N o'clock every day), sets all the series from the basic schedule onto the time base, and draws up a broadcast schedule (step 804). FIG. 6 shows an example of the broadcast schedule drawn up from the basic schedule of FIG. 5. The broadcast schedule is constructed by, in addition to the attributes similar to those of the basic schedule, broadcast time and episode_number. The broadcast time can be calculated from the transmission time of the series and the order of schedule in the basic schedule. For example, when the broadcast schedule starts from 0:00, since the transmission time of the first series 100 is 0.40 hour (24 minutes), the broadcast time in the broadcast schedule is set from 0:00 to 0:24. The next series 1 starts from the broadcast end time 0:24 of the series 100 and has transmission time of 0.40 hour (24 minutes), so that the broadcast time is set from 0:24 to 0:48. The broadcast time is calculated by similar calculation with respect to the subsequent series.

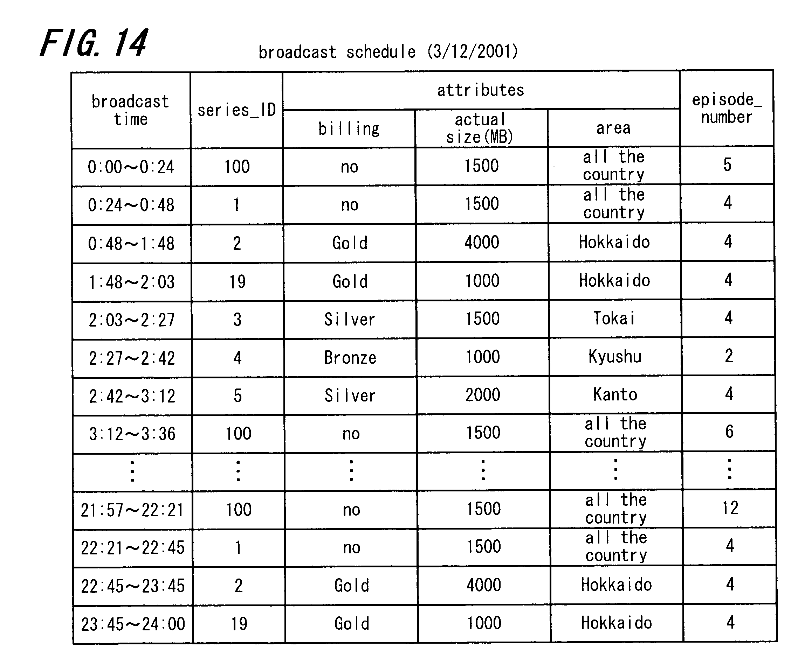

For each series, episode_number is assigned. episode_number plays the role of a version. When there is no possibility of a change in events of the same series, the same episode_number is given. When there is the possibility of a change in contents to be transmitted, episode_number is updated. The broadcast schedule has to be transmitted to the receiving apparatus before transmission of the contents to some extent. To enable contents to be registered until the start of transmission, a transmission schedule to which episode_number is given at preset update frequency is drawn up and transmitted to the receiving apparatus prior to the registration of the contents. In an example of the broadcast schedule of March 12, 2001 of FIG. 14, the final episode_number of the series for force start of the series 100 is 12. In a broadcast schedule of March 12, 2001 of FIG. 6, episode_number is therefore assigned from 13. To the series for force start, episode_number is increased each broadcast, by which the receiving apparatus detects the possibility of updating of the contents of the series for force start and starts in the broadcast time of the series for force start without fail (the operation of the receiving apparatus will be described hereinlater). Since the update frequency of the series 1 is once a day, "1" is added to episode_number "4" in the broadcast schedule of March 12, 2001 of FIG. 14 to thereby set "5" in the broadcast schedule of March 12, 2001 of FIG. 6. Similar process is performed for the other series of which-update frequency is once a day.

The same episode_number as that of the series whose transmission time is earlier in the same day is given to the redundant portion. For example, in the broadcast schedule of March 12, 2001 of FIG. 6, episode_number of the series 1 from 22:21 to 22:45 in the redundant portion is 5 which is the same value as episode_number of the series ID 1 from 0:24 to 0:48. With respect to the series which is updated once a week, episode_number is increased only after elapse of one week after episode_number was updated last time. Although not shown, for example, in the case where episode_number of the series 3 was updated last time on March 10, 2001 and episode_number of the series 4 was updated last time on March 6, 2001, episode_number of the series 3 is not increased since only three days have passed since the updating of last time but episode_number of the series 4 is increased since just 1 week has passed since updating of last time. As a result, in FIG. 6 in comparison to FIG. 5, episode_number of the series 3 is unchanged but episode_number of the series 4 increases from 3 to 4.

In such a manner, the broadcast schedule is drawn up (step 804). The completed broadcast schedule is registered in the broadcast schedule storing part 107 (step 805).

The contents storing part 108 retrieves contents (contents 1 and 7) corresponding to the series (series 1) in the broadcast schedule from the basic schedule storing part 105. The contents storing part 108 transfers the contents (contents 1 and 7) to the transmitting part 109 (step 806). In the time from 0:00 to 0:24, the contents storing part 108 transmits the contents 1 and 7 corresponding to the series 1 and, at this time, by referring to the attribute of billing, scrambles and transmits series set in any of "gold", "silver", and "bronze" and transmits no-billing series in a non-scrambled manner. Subsequently, similar process is performed on each of the series on the broadcast schedule, and the transmitting part 109 transmits the broadcast schedule and contents (step 807). Contents is registered via the contents registering part 101, and the transmitting part 109 transmits the contents registered at the time of transmission of contents.

The redundant portion is generated by repeating the head portion of the basic schedule except for the series for force start (in accordance with the order of the series 100, 1, 2, and 19 in the basic schedule) in the above description. As the schedule of the redundant portion, it is also possible to set the series at random (random order like the series 19, 5, 3, and the like) or arrange events in a ring state (series 1, 2, and 19 on the first day, the series 3, 4 and 5 on the second day, and the series 1, 2, and 19 on the third day). By drawing up the schedule of the redundant portion, the receiving apparatus can receive the contents even when reception inhibited time is set.

The reception inhibited time is set, for example, in midnight by the user who is bothered by noise generated by the operation of the receiving apparatus. When the reception inhibited time is set, the receiving apparatus cannot be set or started during the time every day. For example, when the broadcast schedule as shown in FIG. 6 is drawn up ever day and there is a receiving apparatus in which the reception inhibited time from 2:30 to 2:40 is set, the receiving apparatus cannot receive the series 4 of 2:27 to 2:42. In the method of scheduling the redundant portion by repeating the head portion, since the series 4 is transmitted only once a day, the receiving apparatus loses the chance to receive the series 4. By setting the series at random or in a ring manner in the redundant portion, the receiving apparatus in which the reception inhibited time is set can also get the chance of receiving all of the series in a certain period. Also, the transmission frequency of contents can be made the same.

As described above, by drawing up the basic schedule as a model of the broadcast schedule from the contents information and drawing up the broadcast schedule obtained by repeating the basic schedule, without depending on the actual size of the contents which may be changed every registration and a registration timing, the broadcast schedule can be drawn up prior to transmission of contents.

At the time of drawing up the basic schedule, contents having the same update frequency are set in the same schedule, thereby enabling episode_number to be efficiently increased on the basis of a reception unit. For example, when contents whose update frequency is once a day and contents whose update frequency is once a week are assigned to the same series, episode_number of the series is increased every day. The receiving apparatus also receives every day contents which is updated only once a week included in the series and it is useless. Similarly, contents having the same billing unit are assigned to the same series, so that scrambling can be made on the unit basis of broadcast time of series. A method of scrambling a series on the unit basis of a transmission path, employed in present BS digital broadcasting, can be also used. By assigning series for each filtering information such as area, it becomes unnecessary for the receiving apparatus to receive all the series but is sufficient to receive only series of which area matches by referring to the broadcast schedule. By assigning series on the attribute basis, the receiving apparatus can receive only necessary series and the power can be saved.

At the time of drawing up the basic schedule, series are divided so as not to exceed the total of the maximum sizes and transmission time of set contents. This is performed to avoid increase in time necessary for receiving series again when-the receiving apparatus fails to receive and store the series. Series of the same attribute are arranged so as to be adjacent to each other at the time of drawing up the broadcast schedule for the purpose of reducing the number of sleep and start processes as much as possible.

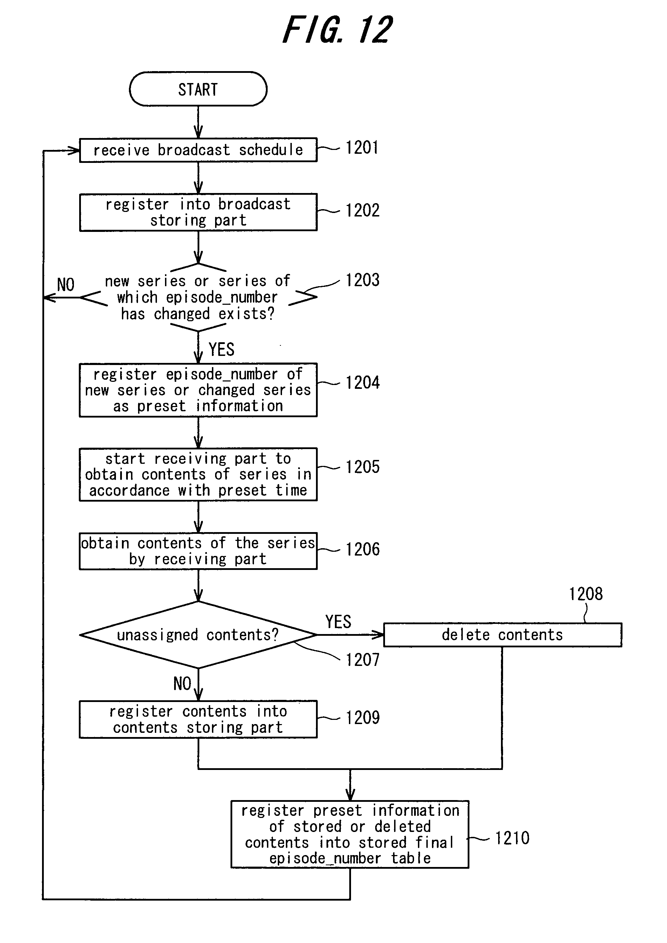

The basic operation of the receiving apparatus according to the embodiment will now be described. FIG. 12 is a flowchart for explaining the operation of the receiving apparatus according to the embodiment. In FIG. 12, the receiving part 110 receives the broadcast schedule (FIG. 6) (step 1201) and registers it in the broadcast schedule storing part 111 (step 1202).

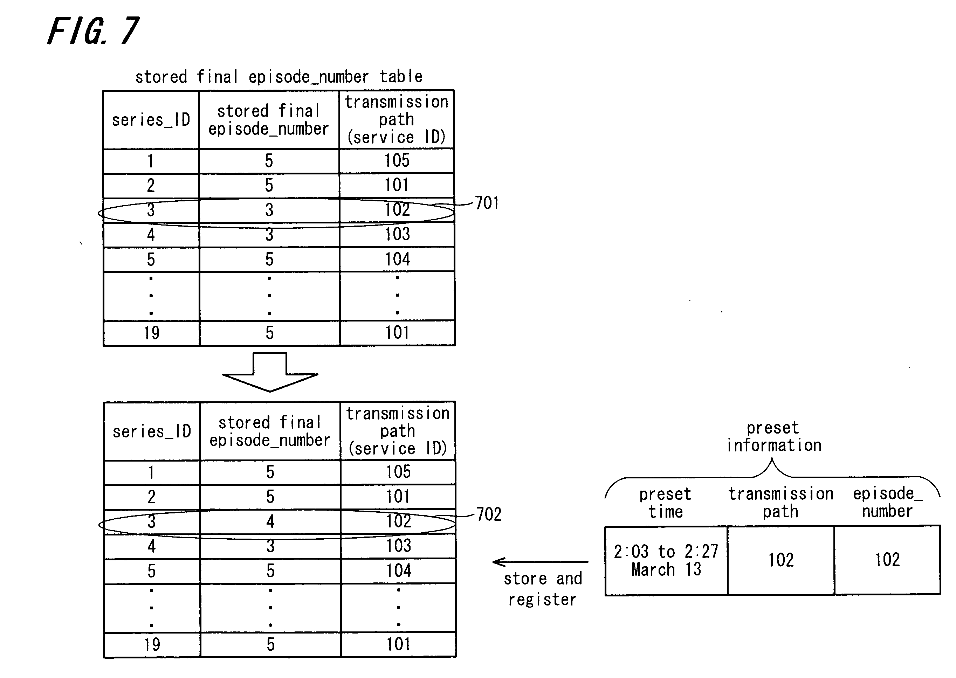

The presetting part 112 determines, as a series to be preset (701) , a series whose episode_number is changed first by comparing the stored final episode_number table as shown in FIG. 7 with the broadcast schedule of the broadcast schedule storing part 111 (FIG. 6) (step 1203). The process will be described in detail hereinbelow.

When it is assumed that the present time is immediately after the series 5 is received (2:03), since episode_number of the series 3 as the following series is 4 and is updated as compared with episode_number of the series 3 in the stored final episode_number table of FIG. 7, a set of information of a transmission path necessary to receive the series 3 (although not shown, it is assumed that the transmission path is written in the broadcast schedule), series ID, and episode_number is registered as preset information (step 1204).

The presetting part 112 starts the receiving part 110 to receive the contents of the series in accordance with the preset time (step 1205). The receiving part 110 receives the contents of the series (step 1206). If the contents is not unassigned contents (step 1207), it is registered in the contents storing part 113 (step 1209). Unassigned contents will be described in a third embodiment. After completion of registration, the receiving part 110 notifies the presetting part 112 of the completion and registers the preset information as stored episode_number. In the example of FIG. 7, on reception of the notification that the contents of the series 3 registered as preset information is registered in the contents storing part 113, stored final episode_number of the series in the stored final episode_number table is changed (step 1210). As a result, the stored final episode_number of the series 3 is updated from 3 to 4.

After that, the receiving part 110 receives a broadcast schedule again and the receiving apparatus repeatedly performs the operations of step 1201 and subsequent steps.

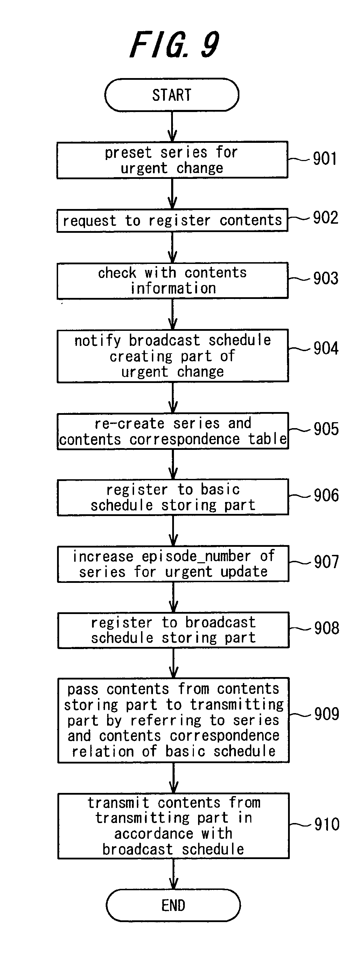

By presetting only the series whose episode_number is updated and repeating the receiving and storing operation, only the series which may be updated can be received. Although the case where the update frequency is preset and contents is updated according to the setting has been described above, an operation of the transmitting apparatus enabling contents to be urgently changed will be described with reference to FIG. 9.

"urgent change" denotes, for example, a case where contents which is preset in a manner such that update frequency is once a week and the contents is received only on Mondays is urgently changed to be registered on Friday.

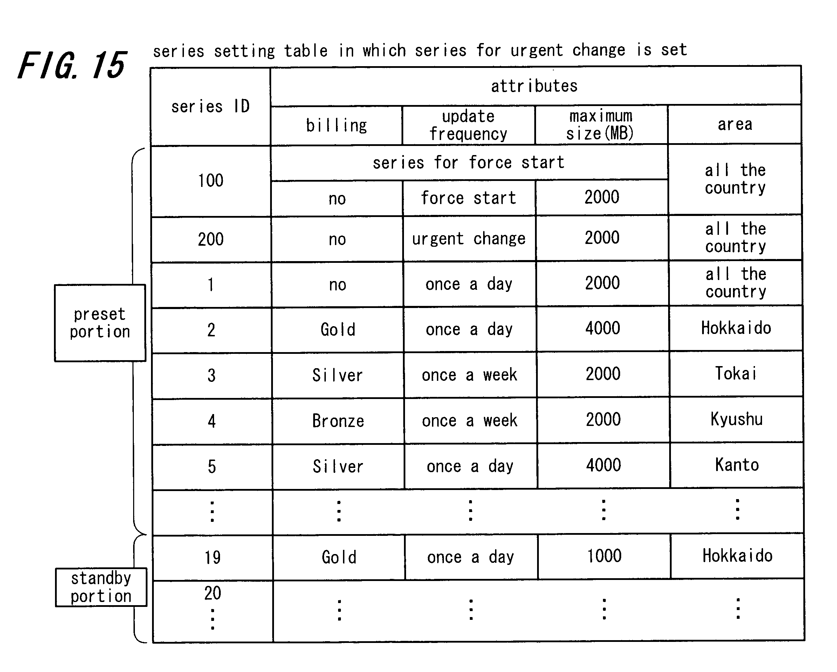

A schedule setting part 104 for urgent change presets a series for urgent change in the series setting table created by the basic schedule creating part 103 and transfers it to the basic schedule creating part 103 (step 901). The series setting table in which the series for urgent change is set is, for example, as shown in FIG. 15. In this case, the series for urgent change is set immediately after the series for force start.

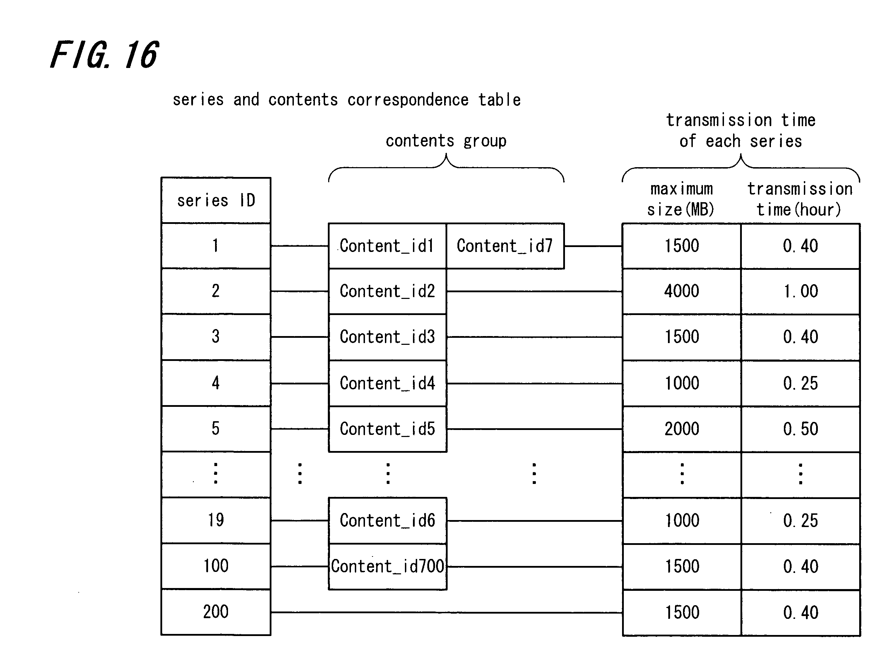

The flow of operations up to creation of the basic schedule from the contents information is the same as that in the basic operation except that the contents is not assigned to the series for urgent change. Specifically, in the series and contents correspondence table, as shown in FIG. 16, the column of a group of contents of the series 200 as a series for urgent change is blank. The flow of creating a broadcast schedule is the same as that in the first embodiment except that episode_number of the series for urgent change is not updated. The reason why episode_number is not updated is to prevent the receiving apparatus from presetting and recording the series for urgent change every time even if urgent updating is not performed. Only in the case of urgent updating, episode_number is updated.

When there is a contents registration request (step 902), the contents registering part 101 checks the contents with contents information stored in the contents information storing part 102 to see whether contents ID, size, and the like are as set values (step 903), and registers the contents into the contents storing part 108. If it is not urgent, at the time of transmitting contents, since no contents is assigned to the series for urgent change, nothing is transmitted for the time of the series for urgent change. If urgent change is detected, the basic schedule creating part 103 is notified of urgent change of the contents (step 904).

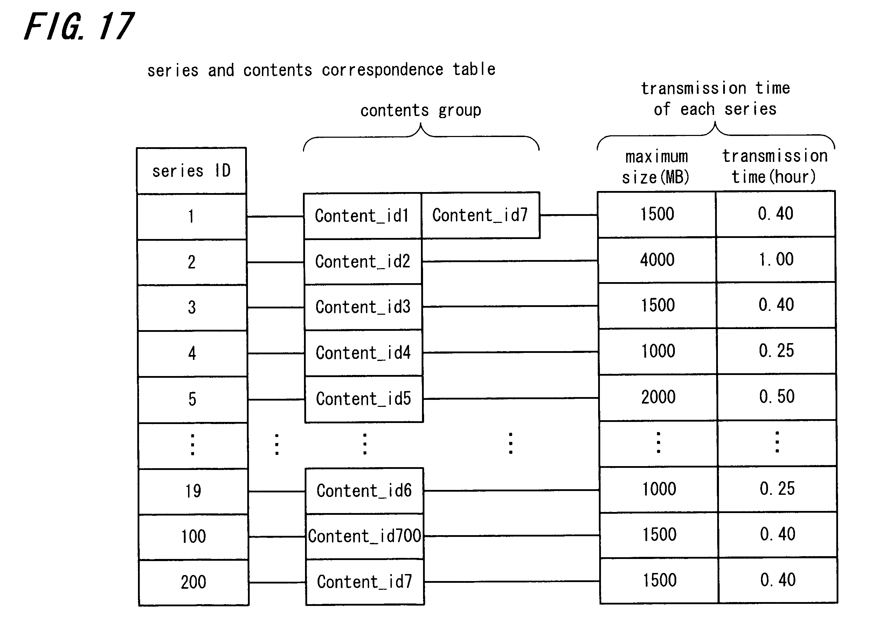

The basic schedule creating part 103 associates the contents with the series for urgent change to re-create the series and contents correspondence table (step 905). For example, in the case of urgently updating the contents 7, a series and contents correspondence table as shown in FIG. 17 is created as a result, and registered in the basic schedule storing part 105 (step 906). In the series and contents correspondence table of FIG. 17, as compared with FIG. 16, it is understood that the contents 7 is assigned to the series 200 for urgent change.

The basic schedule storing part 105 passes the created series and contents correspondence table (FIG. 17) to the broadcast schedule creating part 106. The broadcast schedule creating part 106 receives the notification of urgent change of contents from the contents registering part 101, and performs a process of increasing episode_number of the series for urgent updating of a broadcast schedule being transmitted at present and to be transmitted out of already created broadcast schedules (step 907). The re-created broadcast schedule is registered in the broadcast schedule storing part 107 (step 908).

Operations of the contents storing part 108 (step 909) and the transmitting part 109 (step 910) are the same as those in the basic operation. Since the contents (contents 7) to be urgently updated is assigned to the urgent updating series in the series and contents correspondence table (FIG. 17), the contents 7 is transmitted in the broadcast time of the series for urgent update.

The operation of the receiving apparatus in this case is the same as the basic operation. Since episode_number of the series for force start is always changed, at the time of receiving the contents of the series for force start, the receiving apparatus always starts and performs a presetting process. Consequently, the contents of the series for urgent change whose episode_number has been increased immediately after the series for force start can be also received and stored. In the case where there is no urgent change, episode_number of the series for urgent change is not changed, so that the receiving apparatus does not receive the series for urgent change. Only in the case of urgently changing contents, episode_number is changed to make a series received, and the contents can be urgently updated.

Although the embodiment has been described that the series for urgent update is always set immediately after the series for force start, one or more series for force start may be set between the series for force start.

As described above, by preliminarily setting the series for urgent update between the series for force start in a basic schedule, urgent updating of contents can be addressed at least at the frequency of the series for force start. It is sufficient to change only episode_number in the series for urgent updating for a change in the broadcast schedule in the case where urgent updating of the contents occurs.

### Second Embodiment

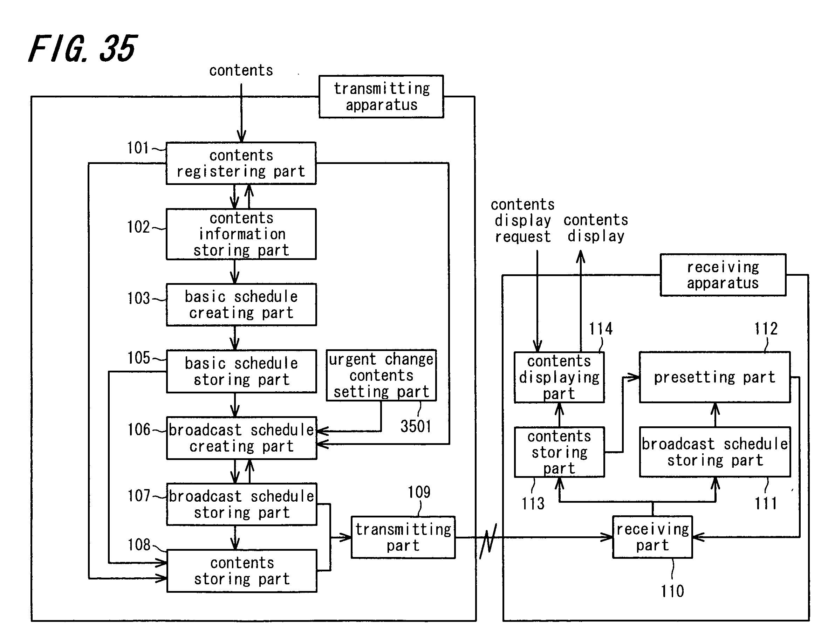

FIG. 35 is a block diagram showing the configuration of a transmitting apparatus and a receiving apparatus in a second embodiment. The block diagram is similar to that of the first embodiment except that there is no schedule setting part 104 for urgent change and an urgent change contents setting part 3501 is added.

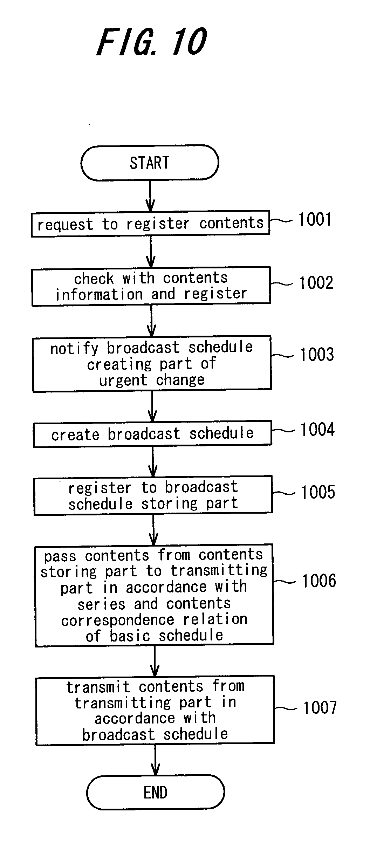

In the second embodiment, an operation on the transmitting apparatus side in the case of using no series for urgent change which enables contents to be urgently changed will be described by using FIG. 10.

The operation in the case where contents are not urgently changed is the same as that of the first embodiment. The case where contents are to be urgently changed will be described.

The contents registering part 101 checks the contents requested to be registered (step 1001) with the contents information stored in the contents information storing part 102 to check whether the contents ID, size, and the like are the same as the set values, and registers the contents into the contents storing part 108 (step 1002) . When it is detected that the contents are to be urgently changed, the broadcast schedule creating part 106 is notified of urgent change of the contents (step 803). The definition of "urgent change" is the same as that in the first embodiment, which denotes a case of updating contents earlier than the preset update frequency.

The broadcast schedule creating part 106 passes the broadcast schedule obtained from the broadcast schedule storing part 107 to the urgent change contents setting part 3501, and the urgent change contents setting part 3501 increases episode_number of a series for transmitting the contents to be urgently changed immediately after a series for force start closest to the present time (step 1004). The re-created broadcast schedule is passed to the broadcast schedule storing part 107 (step 1005).

The operations of the contents storing part 108 (step 1006) and the transmitting part 109 (step 1007) are the same as those of the basic operation. In the series whose episode_number was increased in step 1005, the urgently updated contents is transmitted (steps 1006 and 1007).

The operation of the receiving apparatus in this case is also the same as the basic operation. Since episode_number of the series for force start is always changed, at the time of receiving contents of the series for force start, the receiving apparatus always starts and performs a presetting process. Consequently, contents in the series whose episode_number is increased after the series for force start can be also received and stored. As a result, contents of the series for transmitting urgently updated contents can be also received and stored.

As described above, by setting the series for force start in the broadcast schedule at a certain frequency, the time when the receiving apparatus always starts can be specified, and the transmitting apparatus can assure urgent updating at the same frequency.

### Third Embodiment

In a third embodiment, an operation in the case of using a series for deletion at the time of instructing the receiving apparatus to delete subscribed contents will be described.

First, problems in the instruction of deleting subscribed contents will be described.

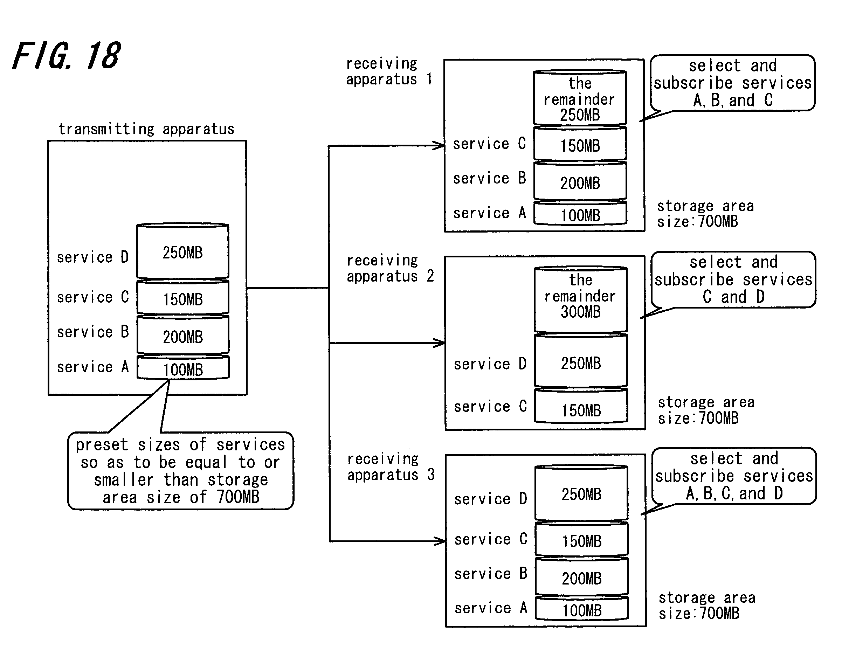

In the case of providing service which has to be subscribed, it is necessary to prevent overflow of the storage area of the receiving apparatus in any combination of services selected by the receiving apparatus. For example, when the storage area of a receiving apparatus is 500MB, if the receiving apparatus selects and subscribes service A requiring 100MB, service B requiring 350MB, and service C requiring 200MB, the contents of all of services cannot be stored and overflow occurs in the storage area. An example of the simplest method of avoiding such a situation is to preliminarily limit a capacity necessary for service so as not to cause overflow even if the user selects all of the services. For example, when the size of the storage area of each receiving apparatus is 700MB as shown in FIG. 18, the transmitting apparatus presets services so that the total of services to be selected is up to 700MB. Consequently, even when the receiving apparatus selects services in any combination, all of the contents of the selected services can be always stored.

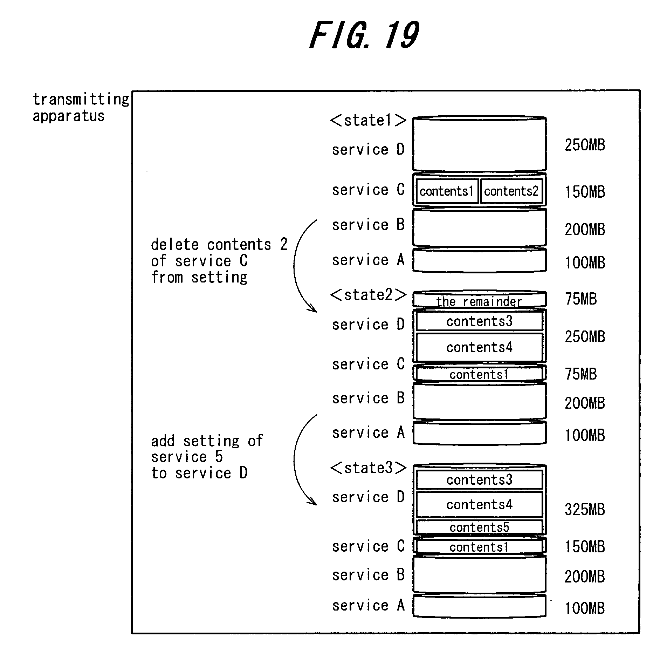

A Problem which occurs when service is added or deleted in such a case will be described. It is now assumed that service to be selected is scrambled, a key for descrambling is given to the receiving apparatus when the receiving apparatus performs a subscribing process, and the key is invalidated when the receiving apparatus stops the subscription. Assuming that a receiving apparatus 1 stops service C in a state of FIG. 18. As a result, the receiving apparatus 1 cannot descramble the service C and the contents of the service C is not updated. It is assumed that, for example, when the service C is made up of contents 1 and 2 (state 1), after the receiving apparatus performs the canceling process, a provider for providing the contents 2 stops providing the contents 2. The contents 2 in the service C is therefore deleted from the setting as shown in a state 2 of FIG. 19, and 75MB in the storing apparatus in the receiving apparatus is unused from the viewpoint of management in the transmitting apparatus. The transmitting apparatus transmits unassigned contents for deleting the contents 2 which is deleted from the setting by using the service C. The unassigned contents denotes such contents as dummy contents in which only the ID of the contents to be deleted is written, and substance of the contents is not written. On receipt of the unassigned contents, the receiving apparatus deletes the contents having the ID. However, in this case, the receiving apparatus 1 has already canceled the subscription of the service C, so that the receiving apparatus 1 cannot receive the unassigned contents and delete the contents 2. After that, the provider for providing contents 5 to the unused area appears and the contents 5 is added to service D (state 3).

After that, when the process of subscribing the service D is performed by the receiving apparatus 1, the receiving apparatus 1 receives the key of the service D and starts storing the service D. However, only 250MB is left in the storage area of the receiving apparatus 1 and all of the contents of the service D requiring 325MB cannot be stored.

The operation on the transmitting apparatus side to solve the problem will be described.

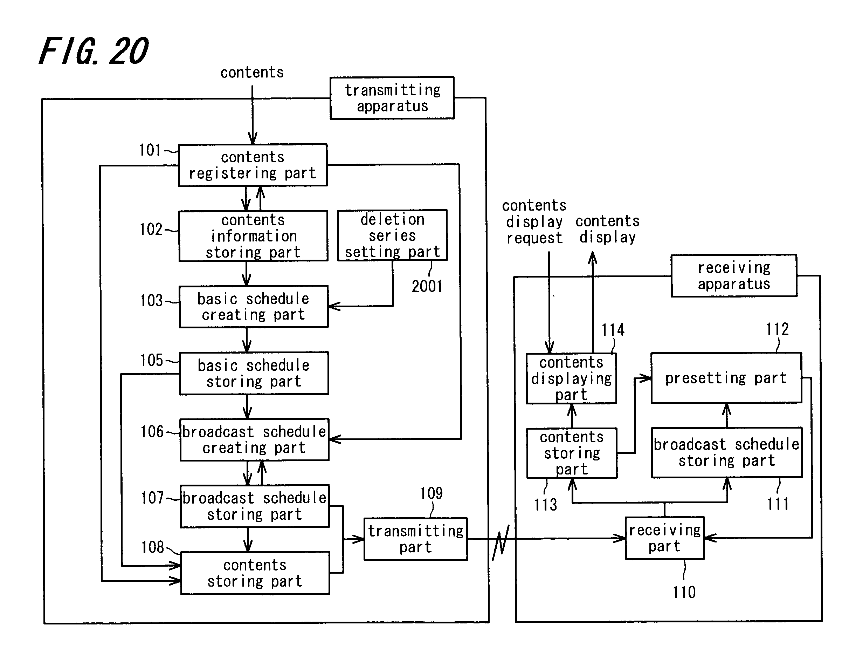

FIG. 20 is a block diagram showing the configuration of a transmitting apparatus and a receiving apparatus in the embodiment. FIG. 20 is the same as the block diagram in the first embodiment except that a deletion series setting unit 2001 is used as the urgent change schedule setting part 104.

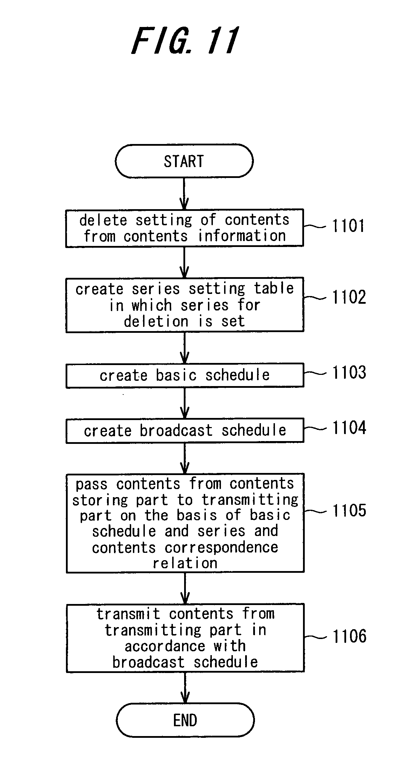

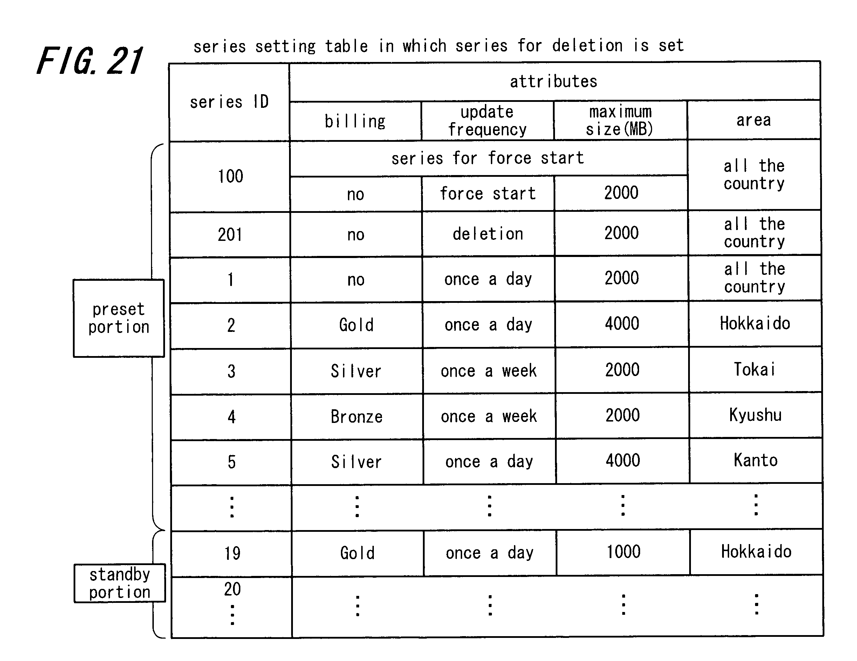

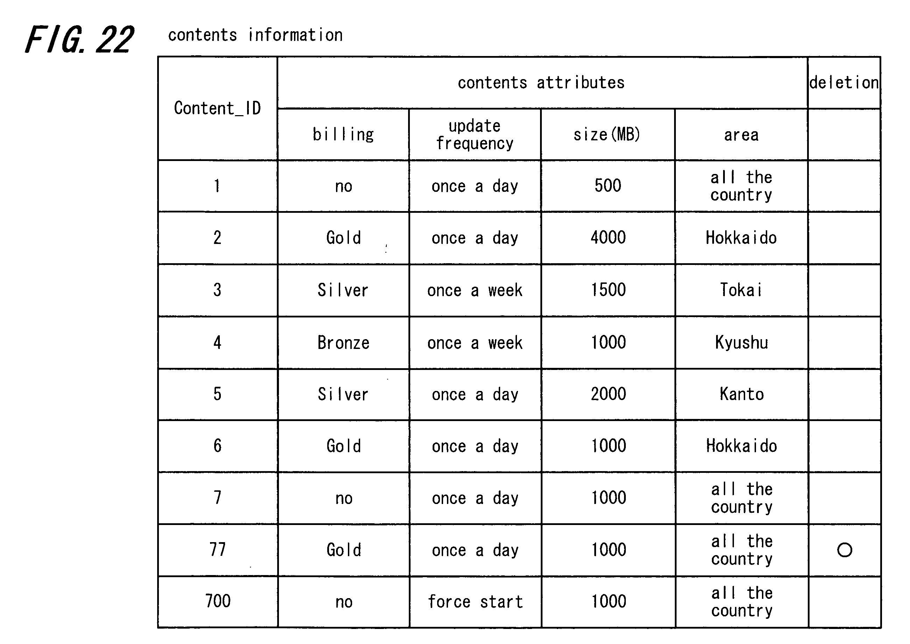

The operation of the transmitting apparatus in the embodiment will be described by referring to the flowchart of FIG. 11. When a contents provider for transmitting contents in a subscribed service announces that it will stop transmission of the contents, the setting of the contents is deleted from the contents information (step 1102). When the setting of the contents is deleted, the contents information storing part 102 sets a flag indicative of the deletion. For example, in the contents information of FIG. 22, a flag indicating that the contents 77 is deleted is set. The deletion series setting part 2001 sets a series for deletion in the series setting table of the basic schedule creating part 103 and passes the resultant to the basic schedule creating part 103 (step 1102). The series setting table in which the deletion series is set is as shown in FIG. 21 for example. Although the deletion series is set immediately after the series for force start in this case, the deletion series may be set anywhere and the series for force start may not be set. Since the deletion series has to be received by all of the receiving apparatuses, it is not scrambled ("no" is set in billing).

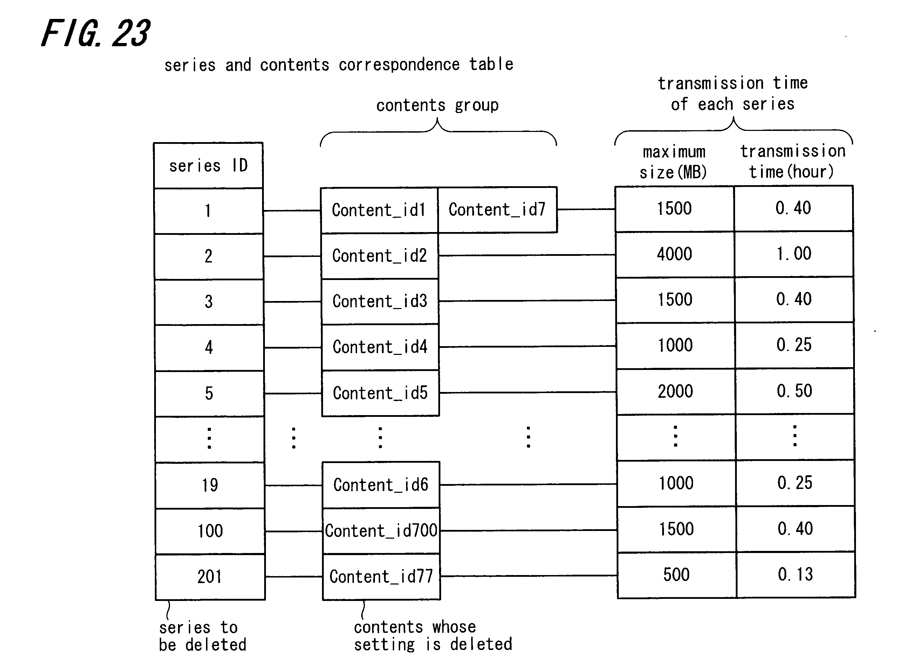

The process for creating the series table, basic schedule, and series and contents correspondence table performed by the basic schedule creating part 103 which has received the contents information (FIG. 22) from the contents information storing part 102 is similar to the basic operation in the first embodiment except that contents in which the flag of deletion is set in the contents information is assigned to the deletion series (step 1103). As a result, a series and contents correspondence table as shown in FIG. 23 is created. In FIG. 23, deleted contents can be distinguished from normal contents. When the transmitting part 109 transmits the contents, unassigned contents for instructing the receiving apparatus to delete contents is transmitted as contents 77. Unassigned contents denotes contents in which only the ID of contents to be deleted is written. When the unassigned contents is received, the receiving apparatus deletes the contents having the ID. The process for creating the broadcast schedule from the basic schedule and transmitting the contents and unassigned contents is similar to that in the first embodiment (steps 1104 to 1106). In place of making the contents of which setting is deleted identified in the series and contents correspondence table, the unassigned contents may be registered in the contents registering part 101, stored in the contents storing part 108, and sent by the transmitting part 109.

The operation on the receiving apparatus side in the case of using the deletion series is the same as that of the receiving apparatus in the basic operation of the first embodiment. Since unassigned contents is determined in step 1207 in the flow of FIG. 12, the contents having the ID described in the unassigned contents is deleted from the contents storing part 113.

As described above, by setting the non-scrambled deletion series for transmitting unassigned contents, the instruction of deleting contents can be given with reliability to the receiving apparatus which has canceled subscription of the scrambled service.

### Fourth Embodiment

Although the case of transmitting unassigned contents for explicitly instructing deletion of contents from the transmitting apparatus has been described in the third embodiment, in the embodiment, a method of regulating presentation of expired contents in the receiving apparatus by assigning presentation expiry in the receiving apparatus to each contents in the transmitting apparatus will be described.

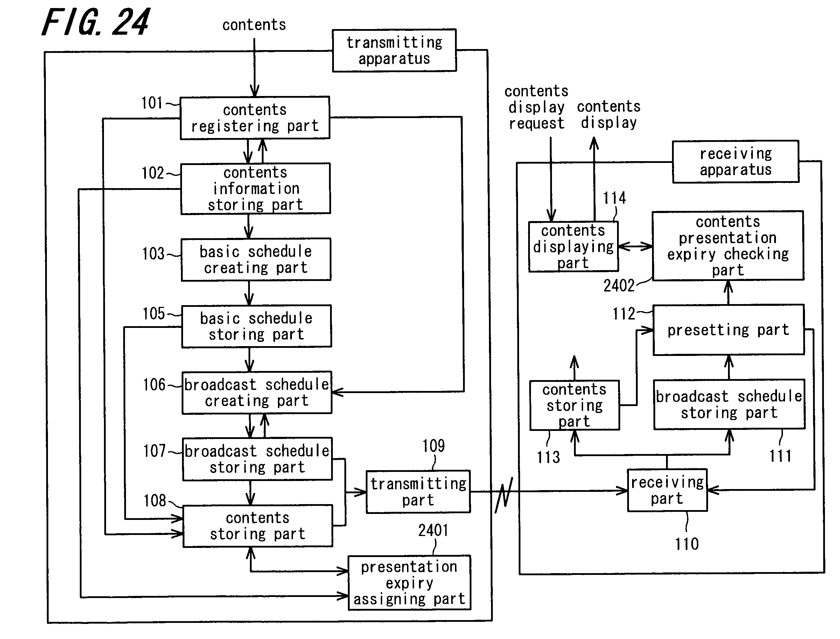

FIG. 24 is a diagram showing the configuration of a transmitting apparatus and a receiving apparatus in the embodiment. Reference numeral 2401 denotes a presentation expiry assigning part for assigning presentation expiry to contents, and 2402 indicates a contents presentation expiry checking part for determining whether contents can be displayed or not in accordance with the presentation expiry given to the contents. Except for the parts 2401 and 2402, the components of the third embodiment are the same as those of the first embodiment.

In the case of providing service subscribed by the user (receiving apparatus) to store contents (hereinbelow, called "subscribed service"), there is a problem such that even the user (receiving apparatus) cancels the subscription, the user can view the contents stored before the cancellation. To address the problem, by transmitting contents from the transmitting apparatus while extending the presentation expiry until the end of the subscribed service which is preset by the provider of the subscribed service, the presentation of contents can be stopped on the last day of the subscribed service set by the provider for the receiving apparatus which has canceled the subscription. The method will be described hereinbelow.

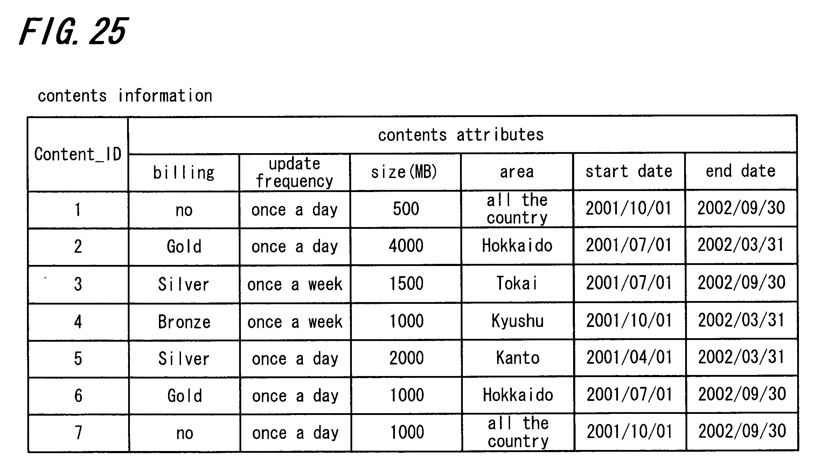

FIG. 25 shows an example of contents information to be stored by the contents information storing part in the embodiment, which is different from the contents information in the first embodiment with respect to the point that start date and end date are given to each contents. For example, with respect to a contents having the contents ID 1, the contents provider sets October 1, 2001 as the start date of transmission and September 30, 2002 as the end date. With respect to the other contents as well, each provider sets the start and end dates of transmission. The process of creating a broadcast schedule from such contents information is similar to that of the first embodiment.

The subsequent process will be described by with respect to, as an example, a case where a series and contents correspondence table as shown in FIG. 4 is stored in the basic schedule storing part and a broadcast schedule as shown in FIG. 6 is stored in the broadcast schedule storing part. The contents storing part 108 in FIG. 24 starts transmitting a series 2 from 0:24 in accordance with the broadcast schedule (FIG. 6). It is known from the series and contents correspondence table (FIG. 4) that the contents transmitted in the series 2 is contents having ID of 2. Prior to transmission of the contents, the contents storing part 108 requests the presentation expiry assigning part 2401 to assign the presentation expiry. At this time, the contents is transferred as well. When the presentation expiry assigning part 2401 is requested to assign presentation expiry to the contents having the ID of 2, first, the presentation expiry assigning part 2401 refers to the start date of transmission of the contents 2 in the contents information (FIG. 6). In this case, the date of July 1, 2001 is obtained.

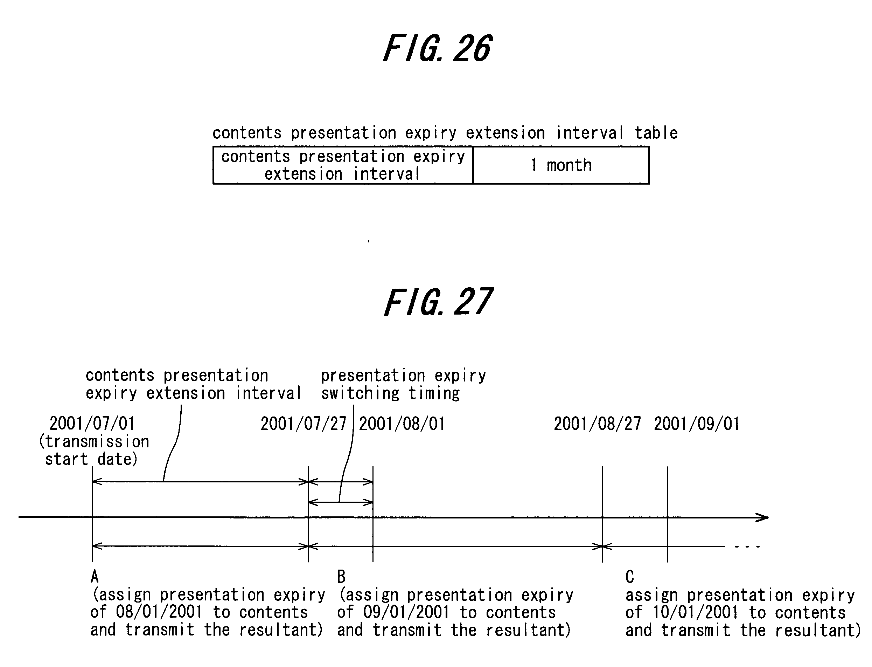

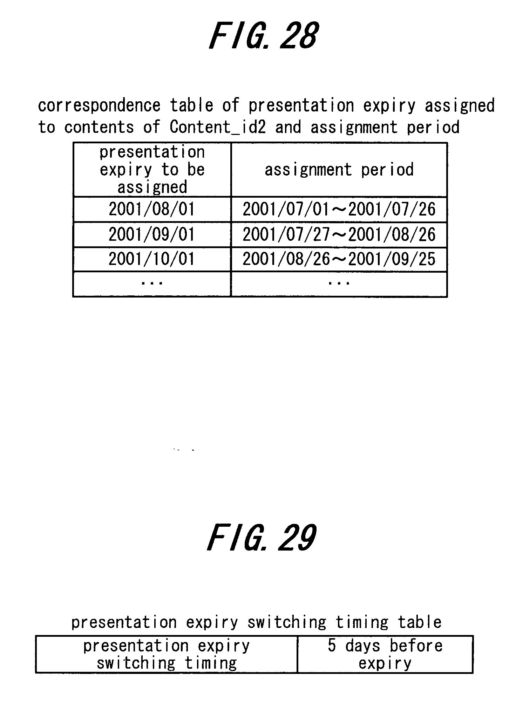

The presentation expiry assigning part 2401 has a contents presentation expiry extension interval table as shown in FIG. 26 and a presentation expiry switching timing table as shown in FIG. 29. In the example of FIG. 26, the contents presentation period extension internal is one month, and the presentation period switching timing in the example of FIG. 29 is 5 days before expiry. The contents presentation period extension interval indicates an interval to extend the presentation expiry assigned to contents from the contents transmission start date. Assignment and switching of the presentation expiry will be described by using the contents having the contents ID 2 as an example by referring to FIG. 27. As described above, July 1, 2001 is obtained as transmission start date of the contents 2. To calculate the presentation expiry, the contents presentation expiry extension internal is added to the transmission start date. From August 1, 2001 and the date indicated by the presentation expiry switching timing (FIG. 29), a timing of switching presentation expiry is obtained. In this case, by subtracting (5 days + 1 day) from August 1, 2001, it is known that the presentation expiry switching timing is July 27, 2001. Thus, the period from July 1, 2001 to July 27, 2001 (period indicated by A in FIG. 27) for assigning the presentation expiry of August 1, 2001 to contents is obtained.

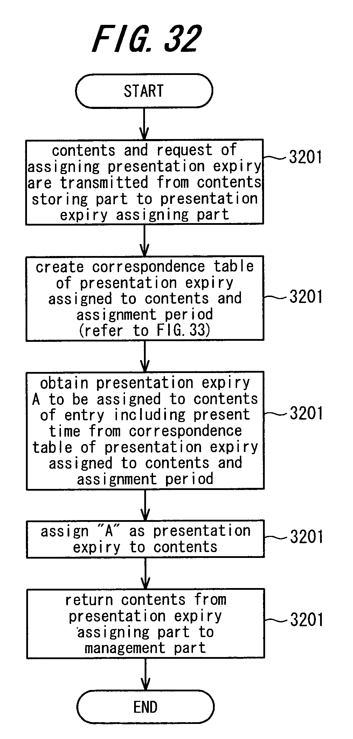

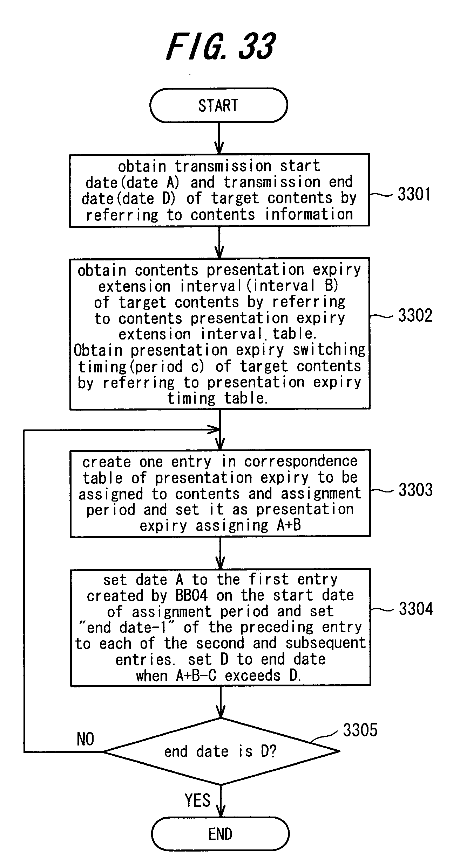

Similarly (the presentation expiry switching timing is added to the first day of each period except for the period immediately after the transmission start date), the correspondence between the presentation expiry assigned to contents until the transmission end date and the period of assignment can be obtained like the period from July 27, 2001 to August 27, 2001 (the period indicated by B in FIG. 27) for assigning the presentation expiry of September 1, 2001 to contents and the period from August 27, 2001 to September 27, 2001 (the period indicated by C in FIG. 27) for assigning the presentation expiry date of October 1, 2001 to contents. As a result, a correspondence table of the presentation expiry assigned to contents and the assignment period as shown in FIG. 28 is created. FIG. 33 shows a flow of creating the correspondence table between the presentation expiry assigned to contents and the assignment period.

In such a case, when the present date is July 15, 2001, by retrieving an entry including July 15, 2001 in the assignment period from FIG. 28, the presentation expiry assigned to the contents having the contents ID 2 is known as August 1, 2001. Therefore, the presentation expiry assigning part 2401 assigns August 1, 2001 as the presentation expiry to the contents having the ID 2 and returns the resultant to the contents storing part 108.

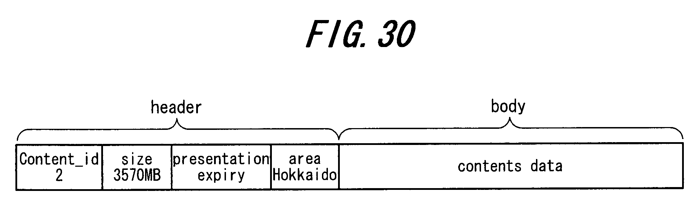

The contents storing part 108 which receives the contents to which the presentation expiry is assigned passes the contents to the transmitting part 109, and the transmitting part 109 transmits the contents. FIG. 30 shows an image of the contents transmitted from the transmitting part 109. The presentation expiry is included together with the contents ID, the actual size, and the like of the header, and the contents is transferred. FIG. 32 shows the flow of a process for assigning the presentation expiry starting from a request sent from the contents storing part 102 to the presentation expiry assigning part 2401 to assign the presentation expiry until the presentation expiry assigning part 2401 returns the contents to the contents storing part 108.

Although one each of the contents presentation expiry extending interval (FIG. 26) and the presentation expiry switching timing (FIG. 29) is held in the presentation expiry assigning part 2401 in the above description, the contents presentation expiry extending interval and the presentation expiry switching timing can be set for each contents. It is unnecessary to create the correspondence table of the presentation expiry assigned to contents and the assignment period each time the presentation expiry assigning part 2401 is requested to assign the presentation expiry of contents. The correspondence table may be created at the first request or when a contents is registered in the contents information and re-created when the contents presentation expiry extension interval table or presentation expiry switching timing is changed.

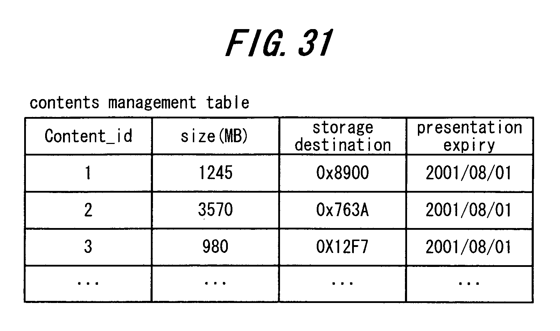

The storing operation of the receiving apparatus is as described in the first embodiment except that the presentation expiry is managed contents by contents. The contents storing part 113 in the receiving apparatus which received contents to which the presentation expiry is assigned manages the contents by using a contents management table as shown in FIG. 31. In the example of FIG. 31, the size in the contents storing part 113 of the contents having ID of 2 is 3570MB, the position of storage of the body is indicated by 0x763A, and the presentation expiry is August 1, 2001.

In such a case, when the contents display part 114 in the receiving apparatus is requested to display the contents having the contents ID 2, the contents display part 114 notifies the contents managing part 113 of the request. The contents managing part 113 retrieves the position of storage of the body of the contents having the contents ID 2 from the contents management information, extracts the body of the contents, and passes the body with the management information of the contents having the contents ID 2 to the contents display 114. The contents display 114 passes the received contents management information to the contents presentation expiry checking part 2402. The contents presentation expiry checking unit 2402 compares the presentation expiry written in the contents management information with the present date, if the presentation expiry is the present date or in future, sends a positive notification as a result of the check and, if the presentation expiry is in the past, sends a negative notification as a result of the check. Only when the positive notification is received as a result of the check, the contents display 114 displays the contents.

When there is no allowance of storage in the storing apparatus at the time of storing contents in the receiving apparatus (hereinbelow, this situation will be described as "the storing apparatus overflows"), it is possible to retrieve the presentation expiry assigned to the contents and delete the contents which is expired. In the case of storing the date when the storing apparatus overflowed last time, if the date when the storing apparatus overflowed is before elapse of predetermined period from the date on which the storing apparatus overflowed last time, the process of deleting the contents which is not expired may not be performed. When the overflow of the storing apparatus repeats in a predetermined period, the possibility that deletion of the contents fails due to a failure in storage of contents whose size is reduced or receipt of unassigned contents is high. In an operation of repeatedly transmitting the contents in accordance with the basic schedule, the possibility that the receiving apparatus returns to a state where the storing apparatus does not overflow when the receiving apparatus stores the size-reduced contents or receives the unassigned contents after a predetermined period is high. For the above reason, the deleting process of a heavy load on the receiving apparatus is not repeated.

Although the presentation expiry of contents is assigned in accordance with the transmission date of the contents in the above description, presentation expiry of a contents may be set by adding a period (for example, one month) to the date on which the contents is registered in the contents registering part 101. For example, presentation expiry of October 5, 2001 may be assigned to the contents registered in September 5, 2001 and the resultant is transmitted.

As described above, by assigning the presentation expiry to contents by the transmitting apparatus while extending presentation expiry, in a receiving apparatus which stops subscription before the transmission of the service is finished, the contents presentation in the service of which subscription has been terminated can be regulated. For example, in FIG. 27, a contents whose presentation expiry is September 1, 2001 is stored in the receiving apparatus which stopped subscription on August 20, 2001. Since the subscription is stopped, the receiving apparatus cannot store a contents having the presentation expiry of October 1, 2001. Therefore, contents are not displayed on September 2, 2001 and after that. A receiving apparatus which continues the subscription can continuously store contents such as a contents having the presentation expiry of September 1, 2001 and a contents having the presentation expiry of October 1, 2001 in accordance with the time. Since a contents to which the next presentation expiry is assigned is stored before the presentation expiry of the preceding contents comes, as long as the subscription is continued, the contents is presented.

### Fifth Embodiment

In a fifth embodiment, a method of deleting desired data in a recording medium of a receiving apparatus without applying a processing load on a receiving apparatus and a method of controlling display of data on the basis of a presentation period assigned to each data in a receiving apparatus will be described.

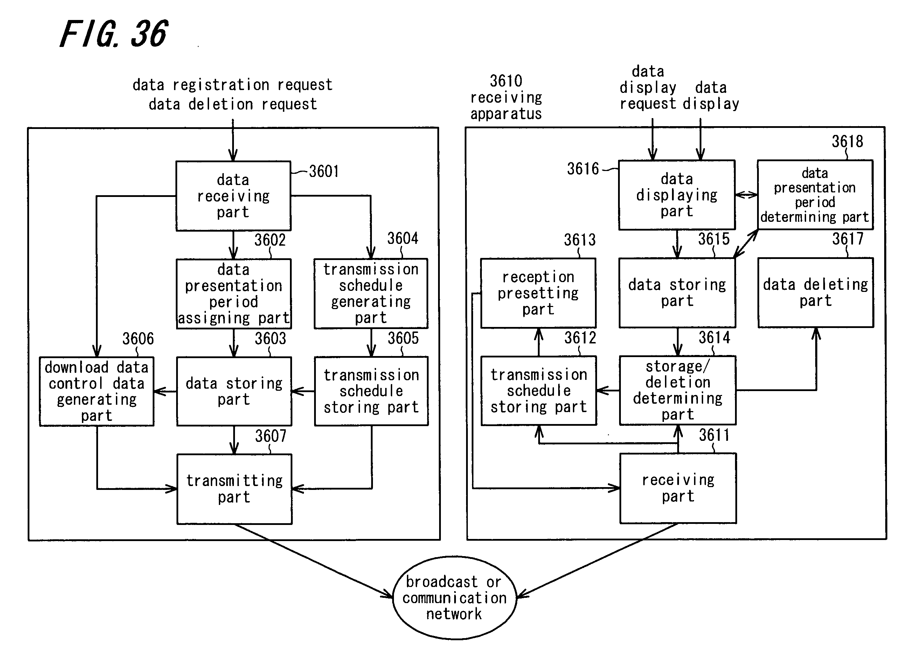

FIG. 36 is a diagram showing the configuration of a transmitting apparatus and a receiving apparatus in the embodiment. A transmitting apparatus 3600 according to the embodiment has: a data receiving part 3601 for receiving a data registration request or deletion request; a data presentation period assigning part 3602 for assigning either a data presentation period designated by a data provider or a data presentation period automatically determined by the transmitting apparatus; a data storing part 3603 for storing received data; a transmission schedule creating part 3604 for drawing up a schedule of transmission of data in response to the registration request or deletion request from the data provider and generating addition information such as data update information, billing information for data, and copy control information; a transmission schedule storing part 3605 for storing the generated transmission schedule; a download data control data generating part 3606 for generating download data control data indicative of information of operation of data to be transmitted; and a transmitting part 3607 for transmitting data stored in the data storing part 3605 and download data control data indicative of operation information of data to be transmitted in accordance with the transmission schedule and transmitting the transmission schedule itself stored in the transmission schedule storing part.

A receiving apparatus 3610 in FIG. 36 has: a receiving part 3611 for receiving the transmitted data, download data control data, and transmission schedule; a transmission schedule storing part 3612 for storing the received transmission schedule; a reception presetting part 3613 for determining reception time of updated data from the information indicative of the updating of data added to the transmission schedule and starting the receiving part; a storage/deletion determining part 3614 for determining whether the data is to be stored or deleted on the basis of the download data control data received; a data storing part 3615 for storing received data; a data display part 3616 for receiving a data display request from the user and displaying desired data; a data deleting part 3617 for deleting data which is determined to be deleted by the storage/deletion determining part 3614 from the data storing part 3615; and a data presentation period determining part 3618, at the time of displaying data, for determining whether the data can be determined or not on the basis of a data presentation period and the present time.

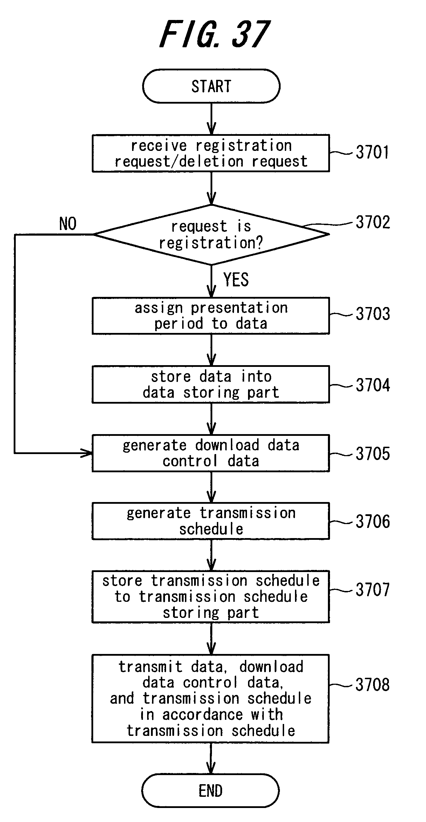

The operation of the data transmitting apparatus and receiving apparatus having the above configuration will be described hereinbelow. FIG. 37 is a flowchart for explaining the processing operation of transmitting/receiving data between the data transmitting apparatus and receiving apparatus according to the embodiment. When the operation of the data transmitting apparatus and receiving apparatus starts, in a processing step (hereinbelow, simply called a step) 3701, a registration request or deletion request is received by the data receiving part 3601 in the data transmitting apparatus. When the registration request or deletion request is received, a check is made to see whether the received request is the registration request or deletion request (step 3702). In the case where the registration request is determined in the checking process, either the data presentation period designated by the data provider or the data presentation period automatically determined by the transmitting apparatus 3610 is assigned (step 3703), and data is registered in the data storing part 3603 (step 3704).

When the deletion request is determined in step 3702, the download data control data generating part 3606 generates download data control data for deleting data from a recording medium of the receiving apparatus 3610. When data is stored in the data storing part 3603, the download data control data generating part 3606 generates download data control data for registering the data into the recording medium of the receiving apparatus 3610 (step 3705). The transmission schedule generating part 3604 generates a transmission schedule in which the data registration request or data deletion request is reflected (step 3706) and stores it into the transmission schedule storing part 3605 (step 3707). According to the transmission schedule registered in the transmission schedule storing part 3605, the transmitting part 3607 transmits the data registered in the data storing part 3603, the download data control data indicative of the operation information of data to be transmitted, and the transmission schedule itself to the receiving apparatus 3610 via broadcast or the communication network (step 3708).

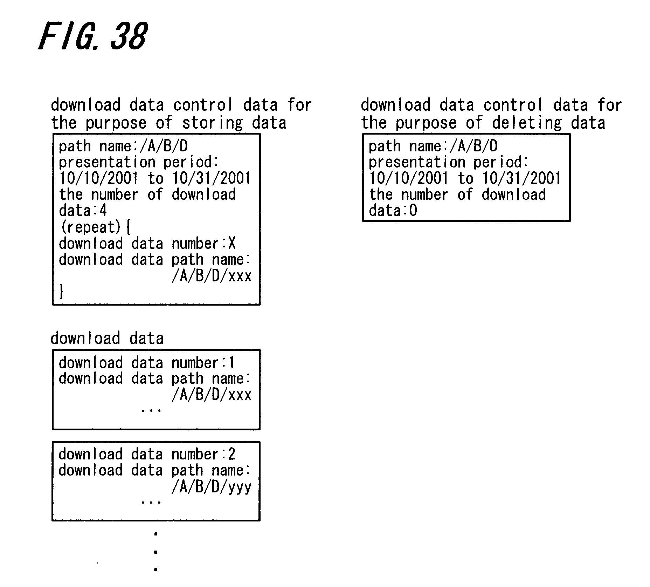

The download data control data generated in step 3705 will now be described. FIG. 38 is a data structure diagram showing the structure of the download data control data. The download data control data indicates the instruction of storing or deleting data to/from the recording medium of the receiving apparatus 3610. The data includes path name of data to be stored/deleted, presentation period, the number of download data to be actually stored, and a portion in which the number and path name of download data are repeated. In the case of storing data to the recording medium of the receiving apparatus 3610, a value of 1 or lager is set in the item of the number of download data of the download data control data and the resultant is transmitted to the receiving apparatus 3610 together with download data to be actually stored. In the case of deleting data from the recording medium of the receiving apparatus 3610, 0 is set in the item of the number of download data of the download data control data and the resultant is transmitted to the receiving apparatus 3610.

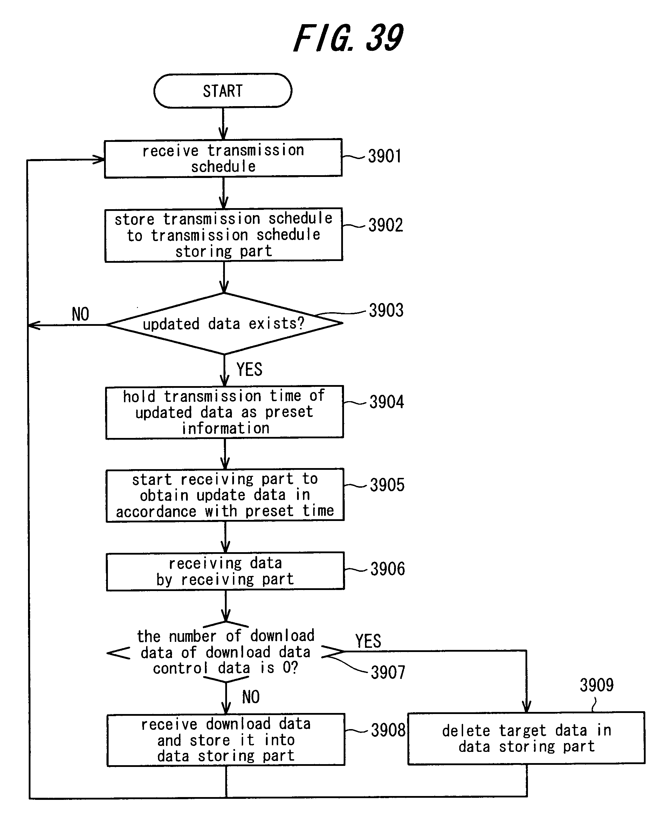

An operation of registering/deleting data to/from the recording medium in the receiving apparatus will now be described. FIG. 39 is a flowchart for explaining the operation of registering/deleting data in the receiving apparatus. When the operation of the data transmitting apparatus and receiving apparatus is started, the receiving part 3611 receives a transmission schedule (step 3901) and registers it into the transmission schedule storing part 3612 (step 3902). Subsequently, whether there is updated data or not in the transmission schedule is checked (step 3903). If YES, start and end time of transmission of the updated data is held as preset time (step 3904). The reception presetting part 3613 activates the receiving part 3611 to obtain the updated data in accordance with the preset time (step 3905), and the receiving part 3611 receives the download data control data (step 3906). The storage/deletion determining part 3614 determines whether the data instructs storage or deletion from the received download data control data (step 3907).

When the number of download data of the download data control data described in FIG. 38 is 0, the storage/deletion determining part 3614 determines the data as the deletion instruction. On the other hand, when the number of download data of the download data control data is 1 or larger, the storage/deletion determining part 3614 determines the data as the storage instruction. When it is determined that the received download data control data is the storage instruction, the download data to be actually stored is received and stored into the data storing part 3615 (step 3908). When it is determined that the received download data control data is a deletion instruction, the data deleting part 3617 deletes the target data from the data storing part 3615 (step 3909).

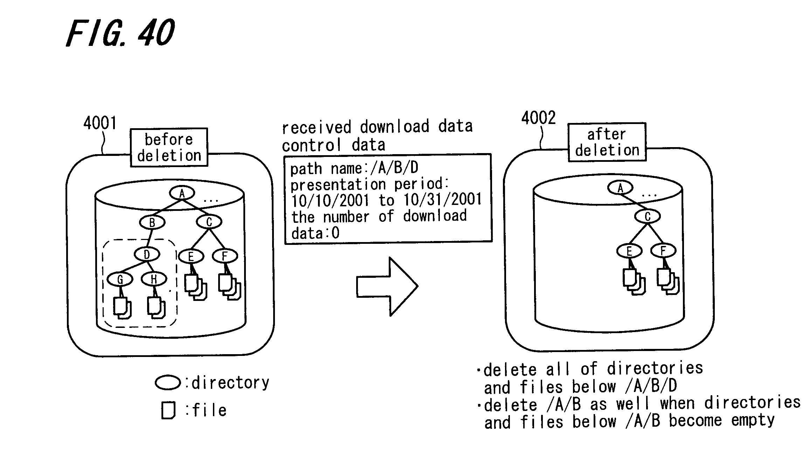

The operation of deleting data from the recording medium in the receiving apparatus will now be described. FIG. 40 is a diagram schematically showing a state where data in the recording medium is reduced by the data deleting process in the receiving apparatus. In FIG. 40, reference numeral 4001 shows a data stored state of the recording medium before the data is deleted from the recording medium in the receiving apparatus 3610. Reference numeral 4002 indicates a data storing state of the recording medium after the data in the recording medium in the receiving apparatus 3610 is deleted. When download data control data having the number of download data of 0 (hereinbelow, called vacancy data) is received, the receiving apparatus 3610 deletes all of directories and files after the path name (/A/B/D in the case of FIG. 40) indicated in the vacant data. When a directory (/A/B in the case of FIG. 4) upper than the path name indicated in the vacant data becomes vacant by the deleting process, the receiving apparatus 3610 deletes the upper directory as well. The recording medium of the receiving apparatus after the deleting process become the state shown by 4002. When no path to be deleted exists in the recording medium at time of receiving the vacant data, the receiving apparatus 3610 determines that the path has been already deleted. When data to be deleted is being referred to by the user at the time of receiving the vacant data, the receiving apparatus 3610 deletes the data at an arbitrary timing after completion of the reference.

By transmitting the instructions of storage and deletion of data from the transmitting apparatus 3600 in the same transmission format by the above process, without performing a special process by the receiving apparatus 3610 and without applying the processing load, desired data can be deleted, and the capacity overflow of the recording medium of the receiving apparatus 3610 can be avoided.

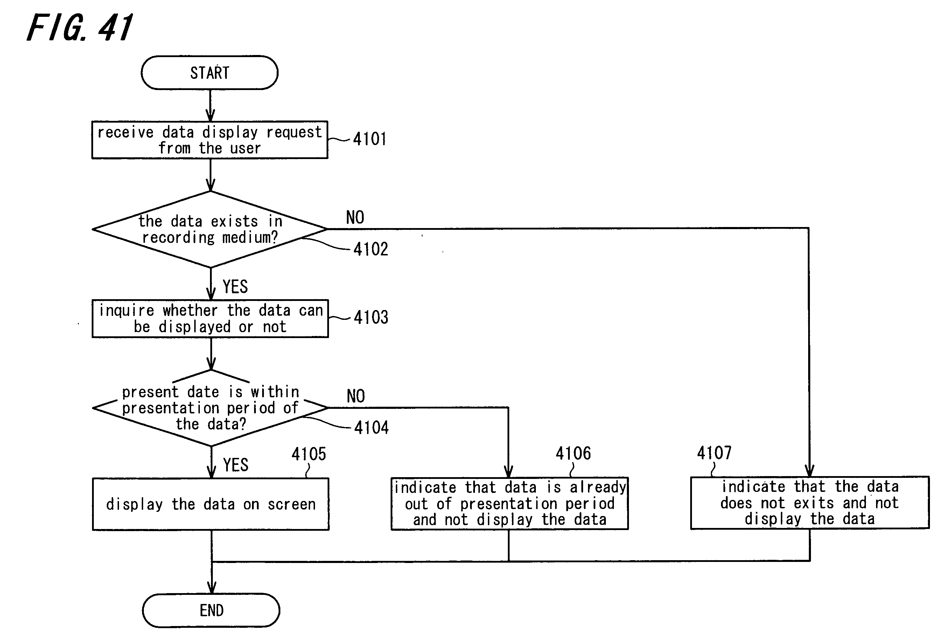

FIG. 41 is a flowchart for explaining a method of controlling whether data can be displayed or not on the basis of the presentation period assigned to each data in the receiving apparatus 3610. The data display part 3616 receives the data display request from the user (step 4101) and inquires the data management part 3615 of whether the data exists in the recording medium or not (step 4102). If NO, a message indicating that the data does not exist in the recording medium is displayed and the data is not displayed (step 4107). If YES, the data display part 3616 inquires the data presentation period determining part 3618 of whether the data can be displayed or not (step 4103). The data presentation period determining part 3618 compares the present date with the data presentation period of the data (step 4104) and, when the present date is within the presentation period, displays the data on the screen of the data display part 3616 (step 4105). On the other hand, when the present date is out of the presentation period, the data presentation period determining part 3618 displays a message that the present date is out of the presentation period on the screen of the data display part 3616 and does not display the data (step 4106).

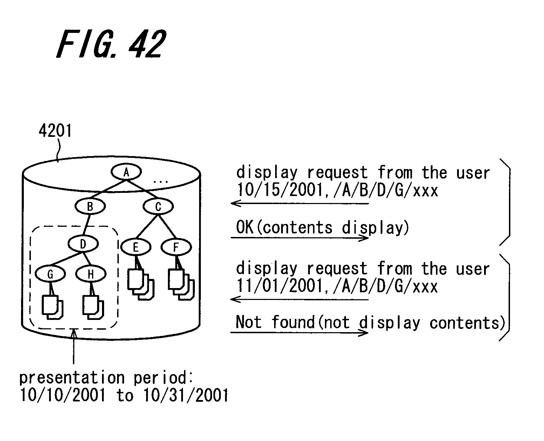

A concrete example of the series of processing operations will be described. FIG. 42 is a diagram showing a concrete example of the control of whether data can be displayed or not performed on the basis of the presentation period assigned to each data in the receiving apparatus 3610. It is assumed that the recording medium 4201 of the receiving apparatus 3610 is in a recording state as shown in FIG. 42. In the recording state, path name is /A/B/D and the presentation period is from October 10, 2001 to October 31, 2001.

In this state, when the present date is October 15, 2001 and a request of displaying data having the path name of /A/B/D/G/xxx is received, since the present date is within the presentation period, the data is displayed. On the other hand, when the present date is November 2001 and a request of displaying data having the path name of /A/B/D/G/xxx is received, the present date is out of the presentation period, so that the data is not displayed.

By the above process, the data provider itself can set the data presentation period, and whether data can be displayed or not can be controlled in accordance with the intention of the data provider.

Although the invention has been described on the basis of the preferred embodiments shown in the drawings, obviously, the person skilled in the art can easily variously change or modify the invention without departing from the idea of the invention. The invention includes such modifications.

## Claims

1. A transmitting apparatus comprising:
a contents information storing part for storing a list of attributes preset for each contents; and
a basic schedule creating part for creating a basic schedule as a model schedule for repeatedly transmitting contents on the basis of contents information stored in the contents information storing part,
wherein a basic schedule for assuring repeated transmission of contents even when the actual size of the contents is changed is created.

2. The transmitting apparatus according to claim 1, further comprising:
a basic schedule storing part for storing a basic schedule;
a broadcast schedule creating part for creating a broadcast schedule from the basic schedule;
a broadcast schedule storing part for storing the broadcast schedule;
a contents storing part for storing contents; and
a transmitting part for transmitting the broadcast schedule and contents in accordance with the broadcast schedule,
wherein the broadcast schedule creating part creates a broadcast schedule from the basic schedule stored in the basic schedule storing part, stores the broadcast schedule into the broadcast schedule storing part, and
wherein said transmitting part transmits the broadcast schedule and contents stored in the contents storing part.

3. The transmitting apparatus according to claim 1, wherein said basic schedule creating part sets a schedule for force start for transmitting a series for force start which always matches with a start condition of a receiving apparatus into the basic schedule.

4. The transmitting apparatus according to claim 3, wherein said basic schedule creating part determines contents to be transmitted in the same series in accordance with a contents grouping condition and creates a basic schedule.

5. The transmitting apparatus according to claim 4, wherein said contents grouping condition is that contents attributes are the same.

6. The transmitting apparatus according to claim 5, wherein said contents attribute is an update frequency.

7. The transmitting apparatus according to claim 5, wherein said contents attribute is a billing attribute.

8. The transmitting apparatus according to claim 5, wherein said contents attribute is a copy control attribute.

9. The transmitting apparatus according to claim 5, wherein said contents attribute is filtering information which is receiver information or user information set for each receiving apparatus or each user.

10. The transmitting apparatus according to claim 9, wherein said filtering information is area information.

11. The transmitting apparatus according to claim 4, wherein said contents grouping condition is not to exceed a total of maximum sizes or longest transmission time of contents to be transmitted in a series.

12. The transmitting apparatus according to claim 4, wherein when said basic schedule creating part assigns contents having the same contents attribute to a plurality of series, said broadcast schedule creating part creates a broadcast schedule so as to transmits the series in successive time at the time of creating a broadcast schedule.

13. The transmitting apparatus according to claim 2, further comprising an urgent change schedule setting part for setting a schedule for urgent change in said basic schedule, wherein in preparation for a case where a contents to be urgently changed occurs, the urgent change schedule setting part presets a schedule for urgent change for transmitting an urgent change contents into the basic schedule.

14. The transmitting apparatus according to claim 13, further comprising a contents registering part for registering a contents, wherein when a contents to be transmitted is registered into the contents registering part after creating a broadcast schedule, the basic schedule creating part assigns the contents so as to be transmitted in accordance with the schedule for urgent change.

15. The transmitting apparatus according to claim 3, wherein when a contents to be urgently updated is stored in said contents storing part, said broadcast schedule creating part re-creates a broadcast schedule so as to indicate updating of the contents in a schedule for broadcasting the contents after transmission end time corresponding to said schedule for force start which is the closest.

16. The transmitting apparatus according to claim 2, further comprising a dummy contents schedule setting part for setting a contents deletion schedule to said basic schedule for transmitting a dummy contents for instructing deletion of the contents, wherein in the case of deleting a setting of a contents in contents information, a dummy contents for instructing the receiving apparatus to delete the contents whose setting is deleted is assigned in a basic schedule so as to be transmitted in a schedule for deleting contents.

17. A transmitting apparatus comprising:
a contents information storing part for storing contents information;
a contents storing part for storing contents;
a presentation expiry assigning part for assigning presentation expiry in a receiving apparatus to the contents; and
a transmitting part for transmitting a contents,
wherein contents are transmitted while extending the presentation expiry assigned to the contents.

18. A data broadcast scheduling system for transmitting/receiving data by using a transmission path, wherein
a transmitting apparatus for transmitting data comprises:
a contents registering part for registering contents;
a contents information storing part for storing contents information;
a basic schedule creating part for creating a basic schedule used for creating a broadcast schedule; and
an urgent change schedule setting part for setting a schedule for urgent change in the basic schedule, and
when said contents registering part determines whether updating of registered contents is urgent or not by using the contents information of the contents and, if the contents updating is urgent, notifies said broadcast schedule creating part of the fact, and said broadcast schedule creating part re-creates a broadcast schedule in response to the notification of said contents registering part.

19. A data broadcast scheduling method for transmitting/receiving data by using a transmission path, wherein
a transmitting apparatus for transmitting data comprises:
a contents registering part for registering contents;
a contents information storing part for storing contents information;
a basic schedule creating part for creating a basic schedule used for creating a broadcast schedule; and
an urgent change schedule setting part for setting a schedule for urgent change in the basic schedule, and
said contents registering part determines whether updating of registered contents is urgent or not by using the contents information of the contents and, if the contents updating is urgent, notifies said broadcast schedule creating part of the fact, and said broadcast schedule creating part re-creates a broadcast schedule in response to the notification of said contents registering part.

20. A recording medium in which a data broadcast scheduling program for transmitting/receiving data by using a transmission path is recorded, wherein
a transmitting apparatus for transmitting data comprises:
a contents registering part for registering contents;
a contents information storing part for storing contents information;
a basic schedule creating part for creating a basic schedule used for creating a broadcast schedule; and
an urgent change schedule setting part for setting a schedule for urgent change in the basic schedule, and
when said contents registering part determines whether updating of registered contents is urgent or not by using the contents information of the contents and, if the contents updating is urgent, notifies said broadcast schedule creating part of the fact, and said broadcast schedule creating part re-creates a broadcast schedule in response to the notification of said contents registering part.

21. A data broadcast scheduling program for transmitting/receiving data by using a transmission path, wherein
a transmitting apparatus for transmitting data comprises:
a contents registering part for registering a contents;
a contents information storing part for storing contents information;
a basic schedule creating part for creating a basic schedule used for creating a broadcast schedule; and
an urgent change schedule setting part for setting a schedule for urgent change in the basic schedule, and
when said contents registering part determines whether updating of registered contents is urgent or not by using the contents information of the contents and, if the contents updating is urgent, notifies said broadcast schedule creating part of the fact, and said broadcast schedule creating part re-creates a broadcast schedule in response to the notification of said contents registering part.

22. A data broadcast scheduling system for transmitting/receiving data by using a transmission path, wherein
a transmitting apparatus for transmitting data transmits vacancy data indicating that a directory for managing data is vacant and
a receiving apparatus for receiving data transmitted from said transmitting apparatus has a data deleting part for, when said vacancy data is received from said transmitting apparatus, automatically deleting a directory corresponding to said vacancy data.

23. The data broadcast scheduling system according to claim 22, wherein the data deleting part of said receiving apparatus deletes said directory when said data managed by said directory does not exist.

24. The data broadcast scheduling system according to claim 22, wherein said transmitting apparatus sets the name of a directory to be deleted in said vacancy data.

25. The data broadcast scheduling system according to claim 24, wherein when the vacancy data in which the name of a directory to be deleted is set is received, said receiving apparatus checks whether or not there is a user who is referring to the data under said directory name before the data under said directory name is deleted.

26. The data broadcast scheduling system according to claim 22, wherein said transmitting apparatus assigns data presentation period data indicative of a data presentation period in said receiving apparatus to said data to be transmitted and transmits the resultant to said receiving apparatus.

27. The data broadcast scheduling system according to claim 26, wherein said receiving apparatus has a presentation period determining part for receiving said data presentation period data and determines whether data can be presented or not by using present time data indicative of the present time and said data presentation period data.

28. A data broadcast scheduling system for transmitting/receiving data by using a transmission path, wherein a receiving apparatus for receiving data has a data deleting part, when vacancy data indicating that a directory for managing data is vacant is received, for automatically deleting a directory corresponding to said vacancy data.

29. A data broadcast scheduling system for transmitting/receiving data by using a transmission path, wherein a transmitting apparatus for transmitting data comprises: a download data control data generating part for generating download data control data which includes operation information of download data in a receiving apparatus for receiving data from the transmitting apparatus,
said download data control data including module number data indicative of the number of data received by said receiving apparatus and directory path name data indicative of a path name of a directory for managing data in said receiving apparatus; and
a transmitting part, in the case of deleting an arbitrary directory in said receiving apparatus, for setting said module number data in said download data control data corresponding to said directory to 0, transmitting the resultant to said receiving apparatus, and transmitting no data corresponding to said directory, and
said receiving apparatus has a data deleting part for monitoring whether data corresponding to said module number data is received or not for predetermined time when the download data control data in which said module number data is 0 is received from said transmitting apparatus and, if the data is not received, deleting said data of said directory corresponding to said module number data.

30. A data broadcast scheduling system for transmitting/receiving data by using a transmission path, wherein a transmitting apparatus for transmitting data comprises: a download data control data generating part for generating download data control data which includes operation information of download data in a receiving apparatus for receiving data from the transmitting apparatus,
said download data control data including module number data indicative of the number of data received by said receiving apparatus and directory path name data indicative of a path name of a directory for managing data in said receiving apparatus, and
a transmitting part, in the case of deleting an arbitrary directory in said receiving apparatus, for setting said module number data of said download data control data corresponding to said directory to 0, transmitting the resultant to said receiving apparatus, and transmitting no data corresponding to said directory.

31. A data broadcast scheduling system for transmitting/receiving data by using a transmission path, wherein a receiving apparatus for receiving data comprises a data deleting part, when download data control data indicative of operation information of download data in said receiving apparatus for receiving data transmitted from a transmitting apparatus in which module number data indicative of the number of data received by said receiving apparatus is 0 is received from said transmitting apparatus for transmitting data to aid receiving apparatus, for monitoring whether data corresponding to said module number data is received or not for predetermined time and, if the data is not received, for deleting data of a directory for managing data in said receiving apparatus corresponding to said module number data.

32. A data broadcast scheduling method for transmitting/receiving data by using a transmission path, comprising the steps of:
generating download data control data which includes operation information of download data in a receiving apparatus for receiving data from a transmitting apparatus for transmitting data in the transmitting apparatus;
setting module number data indicative of the number of data received by said receiving apparatus and directory path name data indicative of a path name of a directory for managing data in said receiving apparatus to said download data control data;
setting said module number data in said download data control data corresponding to said directory to 0 and transmitting the resultant data to said receiving apparatus at the time of deleting an arbitrary directory in said receiving apparatus; and
transmitting no data corresponding to said directory.

33. A data broadcast scheduling method for transmitting/receiving data by using a transmission path, comprising the steps of:
monitoring whether data corresponding to module number data indicative of the number of data received by a receiving apparatus for receiving data is received or not for a predetermined time, when download data control data which indicates operation information of download data in said receiving apparatus for receiving data from a transmitting apparatus for transmitting data to said receiving apparatus, in which said module number data is 0 is received from the transmitting apparatus in said receiving apparatus; and
when the data is not received, deleting said data in a directory for managing data in said receiving apparatus, which corresponds to said module number data.

34. A recording medium in which a data broadcast scheduling program for transmitting/receiving data by using a transmission path is recorded, the program comprising the steps of:
monitoring whether data corresponding to module number data indicative of the number of data received by a receiving apparatus for receiving data is received or not for a predetermined time, when download data control data which indicates operation information of download data in said receiving apparatus for receiving data from a transmitting apparatus for transmitting data to said receiving apparatus, in which said module number data is 0, is received from the transmitting apparatus in said receiving apparatus; and
when the data is not received, deleting said data in a directory for managing data in said receiving apparatus, which corresponds to said module number data.

35. A data broadcast scheduling program for transmitting/receiving data by using a transmission path, comprising the steps of:
monitoring whether data corresponding to module number data indicative of the number of data received by a receiving apparatus for receiving data is received or not for a predetermined time, when download data control data which indicates operation information of download data in said receiving apparatus for receiving data from a transmitting apparatus for transmitting data to said receiving apparatus, in which said module number data is 0 is received from said transmitting apparatus, in said receiving apparatus; and
when the data is not received, deleting said data in a directory for managing data in said receiving apparatus, which corresponds to said module number data.

36. A data broadcast scheduling system for transmitting/receiving data by using a transmission path, wherein a transmitting apparatus for transmitting data comprises: a download data control data generating part for generating download data control data which includes operation information of download data in a receiving apparatus for receiving data from the transmitting apparatus,
said download data control data including module number data indicative of the number of data received by said receiving apparatus and directory path name data indicative of a path name of a directory for managing data in said receiving apparatus; and
a transmitting part, at the time of deleting an arbitrary directory in said receiving apparatus, for setting said module number data in said download data control data corresponding to said directory to 0, transmitting the resultant to said receiving apparatus, and transmitting no data corresponding to said directory, and
said receiving apparatus has a data deleting part, when the download data control data in which said module number data is 0 is received from said transmitting apparatus, for deleting said data of said directory corresponding to said module number data.

37. A data broadcast scheduling system for transmitting/receiving data by using a transmission path, wherein a receiving apparatus for receiving data has a data deleting part, when download data control data indicative of operation information of download data in said receiving apparatus for receiving data transmitted from said transmitting apparatus in which data of the number of modules indicative of the number of data received by said receiving apparatus is 0 is received from said transmitting apparatus for transmitting to said receiving apparatus, for deleting data of a directory for managing data in said receiving apparatus corresponding to said module number data.

38. A data broadcast scheduling method for transmitting/receiving data by using a transmission path, comprising a step, when download data control data indicative of operation information of download data in a receiving apparatus for receiving data transmitted from a transmitting apparatus for transmitting data to said receiving apparatus, in which module number data indicative of the number of data received by said receiving apparatus is 0 is received from said transmitting apparatus, of deleting data of a directory for managing data in said receiving apparatus corresponding to said module number data.

39. A recording medium in which a data broadcast scheduling program for transmitting/receiving data by using a transmission path is recorded, the program comprising a step, when download data control data indicative of operation information of download data in a receiving apparatus for receiving data transmitted from a transmitting apparatus for transmitting data to said receiving apparatus, in which module number data indicative of the number of data received by said receiving apparatus is 0 is received from said transmitting apparatus, of deleting data of a directory for managing data in said receiving apparatus corresponding to said module number data.

40. A data broadcast scheduling program for transmitting/receiving data by using a transmission path, the program for allowing a computer to execute a step, when download data control data indicative of operation information of download data in a receiving apparatus for receiving data transmitted from a transmitting apparatus for transmitting data to said receiving apparatus, in which module number data indicative of the number of data received by said receiving apparatus is 0, is received from said transmitting apparatus, of deleting data of a directory for managing data in said receiving apparatus corresponding to said module number data.

41. A data receiving apparatus comprising:
a receiving part for receiving a transmission broadcast schedule and contents transmitted from a transmitting apparatus having a broadcast schedule creating function;
a broadcast schedule storing part for storing the broadcast schedule;
a presetting part for presetting reception to start the receiving part;
a content storing part for storing received contents; and
a contents display part for displaying the contents,
wherein said presetting part presets reception in the receiving part on the basis of the broadcast schedule stored in the broadcast schedule storing part, and the display part calls and displays contents from the contents storing part.

42. A data receiving apparatus comprising:
a receiving part for receiving data, download data control data, and a transmission schedule transmitted from a transmitting apparatus having a transmission schedule creating function;
a transmission schedule storing part for storing the received transmission schedule;
a reception presetting part for determining reception time of updated data from information indicating updating of data added to the transmission schedule and starting the receiving part;
a data storing part for storing the received data;
a storage/deletion determining part for determining whether the data is to be stored or deleted from the received download data control data;
a data display part for accepting the received data and displaying desired data;
a data deleting part for deleting data from the data storing part, the data determined to be deleted by the storage/deletion determining part; and
a data presentation period determining part for determining whether data can be displayed or not on the basis of a data presentation period and present time at the time of displaying data, and
wherein said presetting part presets reception in the receiving part on the basis of the transmission schedule stored in the transmission schedule storing part, the display part calls and displays contents from said data storing part and
said data receiving apparatus further comprises a data deleting part, when download data control data indicative of operation information of download data in a receiving apparatus for receiving data from said transmitting apparatus in which module number data indicative of the number of data received by said receiving apparatus is 0 is received, for deleting data of a directory for managing data in said receiving apparatus.

43. A data receiving apparatus comprising:
a receiving part for receiving data, download data control data, and a transmission schedule transmitted from a transmitting apparatus having a transmission schedule creating function;
a transmission schedule storing part for storing the received transmission schedule;
a reception presetting part for determining reception time of updated data from information indicating updating of data added to the transmission schedule and starting the receiving part;
a data storing part for storing the received data;
a storage/deletion determining part for determining whether the data is to be stored or deleted from the received download data control data;
a data display part for accepting the received data and displaying desired data;
a data deleting part for deleting data from the data storing part, the data determined to be deleted by the storage/deletion determining part; and
a data presentation period determining part for determining whether data can be displayed or not on the basis of a data presentation period and present time at the time of displaying data, and
wherein said presetting part presets reception in the receiving part on the basis of the transmission schedule stored in the transmission schedule storing part, the display part calls and displays contents from said data storing part, and
said data receiving apparatus further comprises a monitoring part, when download data control data indicative of operation information of download data in a receiving apparatus for receiving data from said transmitting apparatus in which module number data indicative of the number of data received by said receiving apparatus is 0 is received, for monitoring whether or not data corresponding to said module number data is received or not, and a data deleting part, if the data is not received, for deleting data of a directory for managing data in said receiving apparatus, which corresponds to said module number data.
